# EUROPEAN PATENT APPLICATION

(11) **EP 4 432 754 A1**
(43) Date of publication of application: **18.09.2024**
(21) Application number: 22891750.6
(22) Date of filing: 18.10.2022
(51) Int. Cl.: H04W 72/04

(54) **SERVICE SENDING METHOD AND APPARATUS, SERVICE RECEIVING METHOD AND APPARATUS, AND STORAGE MEDIUM**

(30) Priority: 12.11.2021 CN 202111342902
(71) Applicant: Datang Mobile Communications Equipment Co., Ltd., Beijing 100085 (CN)
(72) Inventor: YANG, Meiying, Beijing 100085 (CN); WANG, Jiaqing, Beijing 100085 (CN); LUO, Chen, Beijing 100085 (CN); CHENG, Fang-Chen, Beijing 100085 (CN)
(74) Representative: dompatent von Kreisler Selting Werner - Partnerschaft von Patent- und Rechtsanwälten mbB
(86) International application number: PCT/CN2022/125895
(87) International publication number: WO 2023/082953

(57) **Abstract**

Embodiments of the present disclosure provide a service sending method and apparatus, a service receiving method and apparatus, and a storage medium. The service sending method comprises: sending first scheduling information to a terminal, the first scheduling information being used for scheduling, in a first scheduling mode, resources for sending a first data segment of a target service; and configuring an association relationship between the first scheduling information and second scheduling information, and sending the second scheduling information to the terminal, the second scheduling information being used for scheduling, in a second scheduling mode, resources for sending a second data segment of the target service. According to the service sending method and apparatus, the service receiving method and apparatus, and the storage medium provided in the present disclosure, the situation where the resources preconfigured in the first scheduling mode cannot be used to completely send a full data segment of the target service is avoided, the target service can be completely sent to the terminal, and the XR service sending capacity is increased.

## Description

### CROSS-REFERENCE TO RELATED APPLICATION

The present application claims priority to Chinese patent application No. 202111342902.X filed on November 12, 2021, entitled "Service Sending Method and Apparatus, Service Receiving Method and Apparatus, and Storage Medium", which is hereby incorporated by reference in its entirety.

### FIELD

The present application relates to the field of communication, and particular to a method and an apparatus for transmitting a service, a method and an apparatus for receiving a service, a network device, a terminal, and a storage medium.

### BACKGROUND

Extended reality (XR) includes representative forms, such as augmented reality (AR), mixed reality (MR) and virtual reality (VR), and refers to a real and virtual combination of human-computer interaction environment generated through computer technology and wearable devices.

An XR service has the characteristic of periodic transmission/reception. By applying configured grant (CG) or semi-persistent scheduling (SPS) of a semi-static configuration resource to the XR service, signaling overhead may be effectively reduced, and system capacity may be improved.

However, a packet of XR service has a time-varying characteristic. For CG or SPS of the semi-static configuration resource, the resource is generally pre-allocated based on an average packet size counted in a historical period. When an actual packet size is larger than the average packet size, or the change in signal to interference plus noise ratio (SINR) caused by a real-time change in a channel does not match the CG or SPS pre-allocated resource corresponding to the average packet, there is insufficient resource to transmit/receive for the part of data larger than the average packet size.

### SUMMARY

Embodiments of the present application provide a method and an apparatus for transmitting a service, a method and an apparatus for receiving a service, and a storage medium which solves the above problems in the related art.

An embodiment of the present application provides a method for transmitting a service, including:
transmitting first scheduling information to a terminal, where the first scheduling information is used to schedule a resource for transmitting a first data segment of a target service in a first scheduling mode; and
configuring an association relationship between the first scheduling information and second scheduling information, and transmitting the second scheduling information to the terminal, where the second scheduling information is used to schedule a resource for transmitting a second data segment of the target service in a second scheduling mode.

In an embodiment, configuring the association relationship between the first scheduling information and the second scheduling information includes:
configuring an association relationship between first parameter information of the first scheduling information and second parameter information of the second scheduling information.

In an embodiment, the association relationship between the first parameter information of the first scheduling information and the second parameter information of the second scheduling information includes:
the association relationship between the first parameter information and the second parameter information is a target function relationship.

In an embodiment, the target function relationship includes:
an equal relationship; or
the first parameter information of the first scheduling information is an odd number, and the second parameter information of the second scheduling information is an even number; or
the first parameter information of the first scheduling information is an even number, and the second parameter information of the second scheduling information is an odd number.

In an embodiment, the second scheduling information includes the first parameter information of the first scheduling information, the second parameter information of the second scheduling information, and/or the association relationship between the first parameter information of the first scheduling information and the second parameter information of the second scheduling information; and/or
the first scheduling information includes the first parameter information of the first scheduling information, the second parameter information of the second scheduling information, and/or the association relationship between the first parameter information of the first scheduling information and the second parameter information of the second scheduling information.

In an embodiment, the first parameter information is hybrid automatic repeat request (HARQ) process information corresponding to the first scheduling mode, and the second parameter is HARQ process information corresponding to the second scheduling mode.

In an embodiment, the HARQ process information includes an HARQ process number or the number of HARQ processes.

In an embodiment, configuring the association relationship between the first scheduling information and the second scheduling information includes:
the first scheduling information indicates that the second scheduling information is used to transmit the target service.

In an embodiment, the first scheduling information indicates that the second scheduling information is used to transmit the target service includes:
the first scheduling information carries first indication information, where the first indication information is used to indicate that the second scheduling information is used to transmit the target service.

In an embodiment, the first indication information is further used to indicate whether the second scheduling information is used to transmit the target service.

In an embodiment, the second scheduling information further carries specific parameter information, where the specific parameter information is used to indicate that the second scheduling information is used to transmit the target service.

In an embodiment, the first scheduling information indicates that the second scheduling information is used to transmit the target service includes:
the first scheduling information indicates that the second scheduling information satisfying a predetermined condition is used to transmit the target service.

In an embodiment, the predetermined condition includes:
the first scheduling information is transmitted at a first timing for indicating transmitting the second scheduling information at a second timing, and the second scheduling information is used to transmit the target service; or
the first scheduling information is transmitted at a first timing for indicating transmitting the second scheduling information during a first time period, and the second scheduling information is used to transmit the target service.

In an embodiment, the method further includes:
configuring the first scheduling information to indicate, by a second bit field, a resource type of the second scheduling information for transmitting the target service.

In an embodiment, the second scheduling information is configured through a target search space, where the target search space is used to transmit the target service.

An embodiment of the present application further provides a method for receiving a service, including:
receiving first scheduling information transmitted from a network device, and receiving a first data segment of a target service transmitted in a first scheduling mode based on the first scheduling information; and
receiving second scheduling information transmitted from the network device, and receiving a second data segment of the target service transmitted in a second scheduling mode based on the second scheduling information, where an association relationship exists between the first scheduling information and the second scheduling information.

In an embodiment, the association relationship exists between the first scheduling information and the second scheduling information includes:
an association relationship exists between first parameter information of the first scheduling information and second parameter information of the second scheduling information.

In an embodiment, the association relationship between the first parameter information and the second parameter information includes a target function relationship.

In an embodiment, the target function relationship includes:
an equal relationship; or
the first parameter information of the first scheduling information is an odd number, and the second parameter information of the second scheduling information is an even number; or
the first parameter information of the first scheduling information is an even number, and the second parameter information of the second scheduling information is an odd number.

In an embodiment, the second scheduling information includes the first parameter information of the first scheduling information, the second parameter information of the second scheduling information, and/or the association relationship between the first parameter information of the first scheduling information and the second parameter information of the second scheduling information; and/or
the first scheduling information includes the first parameter information of the first scheduling information, the second parameter information of the second scheduling information, and/or the association relationship between the first parameter information of the first scheduling information and the second parameter information of the second scheduling information.

In an embodiment, the first parameter information is hybrid automatic repeat request (HARQ) process information corresponding to the first scheduling mode, and the second parameter is HARQ process information corresponding to the second scheduling mode.

In an embodiment, the HARQ process information includes an HARQ process number or the number of HARQ processes.

In an embodiment, the association relationship exists between the first scheduling information and the second scheduling information includes:
the first scheduling information indicates that the second scheduling information is used to receive the target service.

In an embodiment, the first scheduling information indicates that the second scheduling information is used to receive the target service includes:
the first scheduling information carries first indication information, where the first indication information is used to indicate that the second scheduling information is used to receive the target service.

In an embodiment, the first indication information is further used to indicate whether the second scheduling information is used to receive the target service.

In an embodiment, the second scheduling information further carries specific parameter information, where the specific parameter information is used to indicate that the second scheduling information is used to receive the target service.

In an embodiment, the first scheduling information indicates that the second scheduling information is used to receive the target service includes:
the first scheduling information indicates that the second scheduling information satisfying a predetermined condition is used to receive the target service.

In an embodiment, the predetermined condition includes:
the first scheduling information is transmitted at a first timing for indicating transmitting the second scheduling information at a second timing, and the second scheduling information is used to receive the target service; or
the first scheduling information is transmitted at a first timing for indicating transmitting the second scheduling information during a first time period, and the second scheduling information is used to receive the target service.

In an embodiment, a resource type of the second scheduling information for receiving the target service is indicated by the first scheduling information through a second bit field.

In an embodiment, the second scheduling information is configured through a target search space, where the target search space is used to receive the target service.

An embodiment of the present application further provides a network device, including a memory, a transceiver and a processor,
where the memory is used for storing a computer program, the transceiver is used for transmitting and receiving data under control of the processor, and the processor is used for reading the computer program in the memory and executing the above method for transmitting the service.

An embodiment of the present application provides a terminal, including a memory, a transceiver and a processor,
where the memory is used for storing a computer program, the transceiver is used for transmitting and receiving data under control of the processor, and the processor is used for reading the computer program in the memory and executing the above method for receiving the service.

An embodiment of the present application further provides an apparatus for transmitting a service, including:
a first transmitting module, used for transmitting first scheduling information to a terminal, where the first scheduling information is used to schedule a resource for transmitting a first data segment of a target service in a first scheduling mode; and
a second transmitting module, used for configuring an association relationship between the first scheduling information and second scheduling information, and transmitting the second scheduling information to the terminal, where the second scheduling information is used to schedule a resource for transmitting a second data segment of the target service in a second scheduling mode.

An embodiment of the present application provides an apparatus for receiving a service, including:
a first receiving module, used for receiving first scheduling information transmitted from a network device, and receiving a first data segment of a target service transmitted in a first scheduling mode based on the first scheduling information; and
a second receiving module, used for receiving second scheduling information transmitted from the network device, and receiving a second data segment of the target service transmitted in a second scheduling mode based on the second scheduling information, where an association relationship exists between the first scheduling information and the second scheduling information.

An embodiment of the present application further provides a processor-readable storage medium, where the processor-readable storage medium stores a computer program for causing a processor to execute the above method for transmitting the service or the above method for receiving the service.

In the method and the apparatus for transmitting the service, the method and the apparatus for receiving the service, and the storage medium provided by embodiments of the present application, after transmitting the first scheduling information to the terminal and transmitting the first data segment of the target service in the first scheduling mode, the network device configures the association relationship between the first scheduling information and the second scheduling information and transmits the second scheduling information to the terminal, and the second data segment of the target service is transmitted in the second scheduling mode, thereby the situation where the resource preconfigured by the first scheduling mode cannot completely transmit the entire data segment of the target service is avoided, the target service may be completely transmitted to the terminal, and the transmitting capacity of extended reality (XR) service is increased.

### BRIEF DESCRIPTION OF THE DRAWINGS

In order to illustrate the solutions of the embodiments according to the present application or the related art, the accompanying drawings used in the description for the embodiments or the related art are briefly introduced below. It should be noted that the drawings in the following description are only some embodiments of the present application. For those of ordinary skill in the art, other drawings may be obtained according to these drawings without creative effort.
FIG. 1 is a schematic diagram of periodic transmission of extended reality (XR) services in the related art;
FIG. 2 is a schematic diagram of data arrival and packet distribution of XR services in the related art;
FIG. 3 is a schematic diagram of transmission of different data streams in XR service in the related art;
FIG. 4 is a schematic diagram of transmission of configured grant type 2 in the related art;
FIG. 5 is a schematic flow chart of a method for transmitting a service according to an embodiment of the present application;
FIG. 6 is a schematic flow chart of a method for receiving a service according to an embodiment of the present application;
FIG. 7 is a schematic structural diagram of a network device according to an embodiment of the present application;
FIG. 8 is a schematic structural diagram of a terminal according to an embodiment of the present application;
FIG. 9 is a schematic diagram of an apparatus for transmitting a service according to an embodiment of the present application; and
FIG. 10 is a schematic diagram of an apparatus for receiving a service according to an embodiment of the present application.

### DETAILED DESCRIPTION

In order to describe solutions in embodiments of the present application, relevant knowledge is introduced below.

### (1) Extended reality (XR) service.

XR service is one of the most important type of media application in the 5th generation mobile communication (5G), which includes three representative forms of augmented reality (AR), mixed reality (MR) and virtual reality (VR), and generates combined real and virtual environments and a corresponding human-machine interaction. The degree of virtuality from AR to VR gradually changes from weak to strong, from a virtual world with limited sensor input to a fully immersive virtual world. Through various XR devices, an immersive experience of seamless transition between the virtual world and the real world is achieved, and the illusions of human vision, human hearing, or environment are presented.

Video streaming is one of the main services in XR service. H.264 is the most common video compression standard. In the H.264 compression standard, an I frame, a P frame and a B frame are used to represent a transmitted video picture. The I frame, also known as an intra coded frame, is an independent frame that carries all its own information, which may be decoded independently without referring to other pictures, and may be simply understood as a static picture. As a key frame, the I frame is usually the first frame of a video sequence. The P-frame, also known as inter-frame predictive coded frame, needs to refer to a previous I-frame when encoding. The P frame represents a difference between a current frame and a previous frame, where the previous frame may be an I frame or a P frame. When decoding, the difference defined in this frame needs to be superimposed on the previous cached picture to generate a final picture. The P frame generally occupies fewer data bits than the I frame. However, since the P frame has a complex dependency on previous reference P frame and I frame, the P frame is very sensitive to transmission errors. The B-frame is also known as a bidirectionally predictive coded frame, and a difference between the current frame and a front frame or a rear frame is recorded in the B frame. To decode the B-frame, not only the previous cached picture but also a subsequent decoded picture is needed, and the final picture is obtained by superposition of the front cached picture, the rear picture, and data of current frame. The B frame has a high compression rate, but requires higher decoding performance.

### (2) Characteristics of XR service

Based on the research on XR service by the 3rd generation partnership project (3GPP), XR service has three characteristics, which are as follows.

### I. Periodic transmission/reception characteristic.

An XR service source generates a corresponding packet at a certain refresh rate. For example, a refresh rate of 60 frames per second (FPS) means 60 data frames are generated in every second, and an interval between two of the data frames is 16.67 milliseconds, that is, an arrival period is 16.67 milliseconds; and a refresh rate of 120 FPS means 120 data frames are generated in every second, and an interval between two of the data frames is 8.33 milliseconds, that is, an arrival period is 8.33 milliseconds.

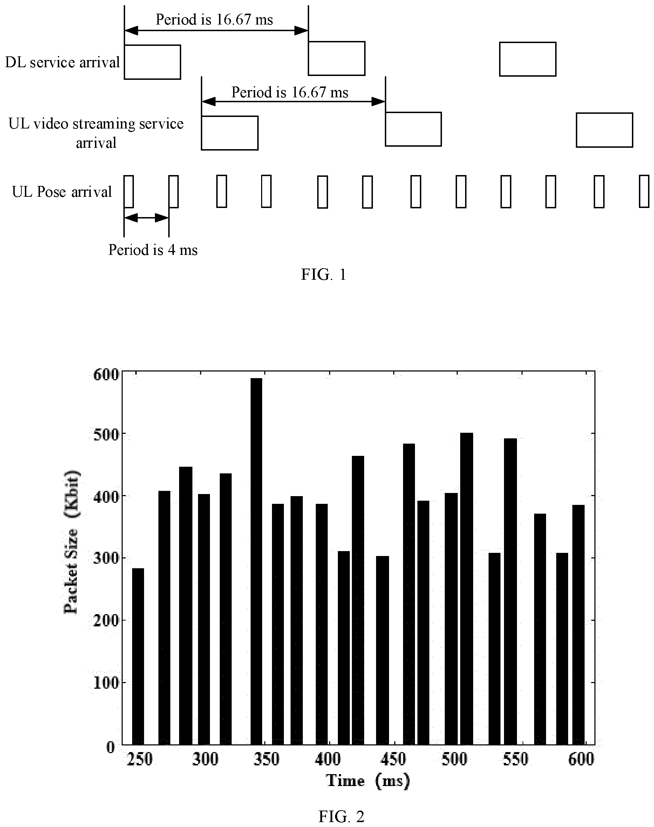

FIG. 1 is a schematic diagram of periodic transmission of XR services in the related art. As shown in FIG. 1, XR services include uplink (UL), downlink (DL), typical audio and video services, etc. The DL service reaches 60 frames per second, that is, the arrival period is 16.67 milliseconds. The UL service includes a video streaming, an audio streaming, UL pose estimation data (pose), etc. The arrival period of the UL video streaming service is 16.67 milliseconds, and the arrival period of the UL pose estimation data service is more intensive, which reaches 4 milliseconds per pose estimation packet.

### II. Time-varying characteristic of a packet size.

The packet size of XR service obeys Pareto distribution, and the packet size and delay jitter of a variable-rate video streaming service obey truncated Gaussian distribution. The arrived packet size for XR service is variable at different times.

FIG. 2 is a schematic diagram of data arrival and packet distribution of XR service in the related art. As shown in FIG. 2, the horizontal coordinates represent time (time) in millisecond (ms), the vertical coordinates represent packet size (packet size) in kilobit (Kbit). As may be seen from FIG. 2, comparing to the typical small packet transmission of ultra-reliable and low latency communications (URLLC), the packet size of XR service changes over time.

### III. Multi-stream characteristic of a packet.

For XR service, there may be multiple data streams. For example, the I frame, P frame, video streaming, audio streaming, pose estimation/control data stream, etc., may exist simultaneously. Based on current 5G quality instruction (QI) and quality of service (QoS) requirement, the requirement levels of different data streams may be different, and different data streams are independent.

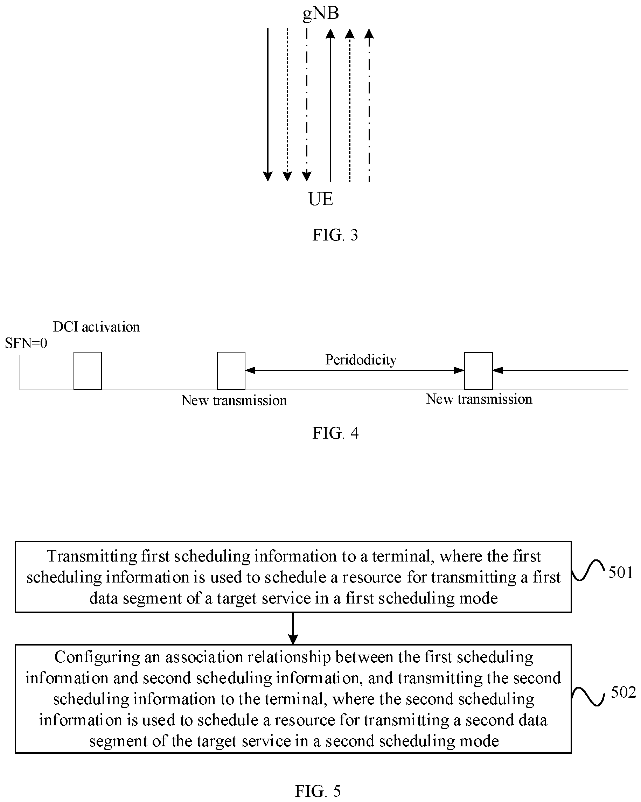

FIG. 3 is a schematic diagram of transmission of different data streams in XR service in the related art. As shown in FIG. 3, the solid lines represent the transmissions of packets corresponding to QOS_1, the dotted lines composed of dots represent the transmissions of packets corresponding to QOS_2, the dotted lines composed of dots and lines represent the transmission of packets corresponding to QOS_3, the arrows pointing from the terminal (user equipment, UE) to the base station (gNB) represent the transmissions of uplink services, and the arrows pointing from the base station to the terminal represent the transmission of downlink services.

### (3) Configured grant (CG) scheduling.

CG grant refers to a resource that is pre-allocated to a terminal by a network device and does not need to be dynamically scheduled. CG scheduling includes CG type 1 and CG type 2.

In CG type 1, a transmission parameter of physical uplink shared channel (PUSCH) is configured by radio resource control (RRC), and a periodic PUSCH transmission opportunity may be determined based on the configuration information. When new data arrives at the uplink of the terminal, PUSCH transmission may be performed directly at the nearest transmission opportunity.

In CG type 2, a transmission parameter of PUSCH is configured jointly by RRC and physical downlink control channel (PDCCH). RRC configures period, offset and other parameters, and PDCCH activation signaling notifies that the configured CG type 2 is activated and indicates scheduling information simultaneously. The terminal may use the corresponding PUSCH resource for uplink CG scheduling transmission only after it receives the activation signaling transmitted from the base station. The PUSCH resource of CG type 2 may be released by a PDCCH deactivation signaling transmitted from the base station.

FIG. 4 is a schematic diagram of transmission of configured grant type 2 in the related art. As shown in FIG. 4, the horizontal axis represents time, the system frame number (SFN) is 0. After a base station transmits downlink control information (DCI) activation signaling, a terminal performs periodic uplink CG scheduling transmission. New transmission represents a new transmission, and periodicity represents a transmission period.

### (4) Semi-persistent scheduling (SPS).

SPS is configured by an RRC signaling per the serving cell for each bandwidth partial (BWP). Multiple allocation resources are activated simultaneously on a same BWP. The activation and deactivation of downlink SPS are independent.

Activating SPS and releasing SPS need to meet the following conditions simultaneously:
I. DCI scrambled by a configured scheduling radio network temporary identity (CS-RNTI) is received;
II. a new data indicator (NDI) field in the DCI is 0;
III. if there is a data feedback indicator (DFI) field, the DFI field is 0; and

IV if the DCI is used to activate SPS, and the *PDSCH-to-HARQ_feedback timing indicator* information field is configured, the information field needs to be configured with an available value from *dl-DataToUL-ACK-r16.* The *PDSCH-to-HARQfeedback timing indicator* represents an indication of time sequence between PDSCH and HARQ, and the *dl-DataToUL-ACK-r16* represents a list of timing for DL signal to transmit acknowledgement (ACK) information configured by a base station in the 5G R16 standard.

In addition to the above information, for the configuration of only one SPS, the associated information field in the DCI that activates SPS further needs to meet the information field configuration in table 1.

**Table 1: DCI field configuration for activating one SPS**

| | DCI format 1_0/1_2 | DCI format 1_1 |
|---|---|---|
| HARQ process number | set to all '0's | set to all '0's |
| Redundancy version | set to all '0's | For the enabled transport block: set to all '0's |

For the configuration of multiple SPS, the associated information field in the DCI that activates one SPS further needs to meet the information field configuration in table 2. In addition, the value of information field of the HARQ process number is used to indicate the configuration of SPS which has the same value as the SPS-Config index.

**Table 2: DCI field configuration for configuring multiple SPS and activating one SPS**

| | DCI format 1_0/1_2 | DCI format 1_1 |
|---|---|---|
| Redundancy version | set to all '0's | For the enabled transport |
| | | block: set to all '0's |

For the configuration of single SPS, the associated information field in the DCI releasing SPS further needs to meet the information field configuration in table 3.

**Table 3: DCI field configuration for releasing one SPS**

| | DCI format 1_0/1_2 |
|---|---|
| HARQ process number | set to all '0's |
| Redundancy version | set to all '0's |
| Modulation and coding scheme | set to all '1's |
| Frequency domain resource assignment | set to all '0's for FDRA Type 0 or for *dynamicSwitch* |
| | set to all '1's for FDRA Type 1 |

For the configuration of multiple SPS, the associated information field in the DCI releasing single or multiple SPS further needs to meet the information field configuration in table 4. In case that the SPS-Config Deactivation State List is configured, the release of single or multiple SPS in the list may be indicated through a value of the information field of the HARQ process number in the DCI. In case that no SPS-Config Deactivation State List is configured, the release of a specific value of SPS is indicated through the information field of the HARQ process number in the DCI.

**Table 4: DCI information field configuration for configuring multiple SPS and releasing single or multiple SPS**

| | DCI format 1_0/1_2 |
|---|---|
| HARQ process number | set to all '0's |
| Modulation and coding scheme | set to all '1's |
| Frequency domain resource assignment | set to all '0's for FDRA Type 0 or for *dynamicSwitch* |
| | set to all '1's for FDRA Type 1 |

SPS retransmission needs to meet the following conditions:
I. CS-RNTI scrambled DCI is received;
II. the NDI indication field in DCI is "1".

The HARQ feedback of SPS PDSCH is fed back based on the following configurations.
1. In case that an activated DCI includes the *PDSCH-to-HARQ_feedback timing indicator* information field, the HARQ-ACK is fed back in slot n+k, where n is the slot in which the SPS PDSCH reception ends, k is provided from the *PDSCH-to-HARQ_feedback timing indicator* information field.

In case that the DCI includes no *PDSCH-to-HARQ_feedback timing indicator* information field, the HARQ-ACK is fed back in slot n+k, where n is the slot in which the SPS PDSCH reception ends, k is *dl-DataToUL ACK,* or *dl-DataToUL ACK r16,* or *dl-DataTo UL -ACK For DCI Format1_2.*

For the Nth SPS PDSCH resource, it is calculated according to the following formula: (Number of Slots Per Frame×SFN+Slot Number in the Frame) = [(Number of Slots Per Frame×SFN Start Time+Slot Start Time)+ N×Periodicity× Number of Slots Per Frame/10]modulo(1024×Number of Slots Per Frame), where *Number of Slots Per Frame* represents the number of slots in a subframe, and *SFN Start Time* and *Slot Start Time* is the start time of the subframe and the slot respectively.

### (5) Dynamic grant (DG) scheduling.

The traditional HARQ process number calculation formula in DG scheduling is: HARQ Process Number=[floor(CURRENT_symbol/Periodicity)]modulo nrofHARQ-Processes CURRENT_symbol=(SFN×Number of Slots Per Frame×Number of Symbols Per Slot+Slot Number In the Frame×Number of Symbols Per Slot+Symbol Number In the Slot).

Based on above content, due to the periodic transmission characteristic of XR service, by CG/SPS, signaling overhead may be effectively reduced and system capacity may be improved. However, if the traditional CG/SPS is directly applied to XR service, the following problems may occur.

Problem 1: for CG/SPS of a semi-static configuration resource, the resource is generally pre-allocated based on an average packet size counted within a historical period, and a problem of inconsistency between the CG/SPS resource and the XR packet size may occur.

In case that an actual packet size is larger than the average packet size, or a change in signal to interference plus noise ratio (SINR) caused by a real-time change in channel does not match the pre-allocated resources for the CG/SPS corresponding to the average packet size, there is not enough resources to transmit the part of data that is larger than the average packet size; in case that an actual packet size is less than the average packet size, or a change in SINR caused by a real-time change in channel does not match the pre-allocated resources for the CG/SPS corresponding to the average packet, the remaining transmission resource may be wasted.

Problem 2: due to the multi-steam characteristic of XR service packet, if DG scheduling is adopted, in case that another service with the equivalent priority is present, since there is no bit indication for a specific service in the bit field of DCI during a DCI scheduling, when a service having the same or higher priority needs to be transmitted, for example, when both XR service and URLLC are present, a resource conflict may occur. That is, in case that the XR service is scheduled first and the packet of the XR service is large, it needs to occupy more time resources; in case that the URLLC is scheduled first, although a URLLC packet is smaller, the period is more frequent.

Furthermore, due to the multi-stream characteristic of XR service packet, each data stream corresponds to different QOS requirements, and for a XR service packet, information of packet for the XR service may be completely obtained only after multiple data streams are received. For example, the I frame, P frame, video streaming, audio streaming, pose estimation/control data stream, etc., correspond to QOS_1 to QOS_N respectively, assume the QOS_1 is equivalent to the QOS of URLLC, and the QOS_N has a lower priority than URLLC, when both the XR QOS_1 and URLLC exist simultaneously, the XR QOS_1 is scheduled first; for other QOS of the XR service, if they exist as URLLC simultaneously, the XR service cannot be scheduled.

Both situations may cause a resource occupancy conflict between the XR service and URLLC. Therefore, if XR service can be distinguished during scheduling, the above situation may be effectively avoided.

To solve the above problems, embodiments of the present application provide a method and an apparatus for transmitting a service, a method and an apparatus for receiving a service, a network device, a terminal, and a storage medium.

In the embodiments of the present application, the term "and/or" describes the association relationship of the associated objects, indicating that there may be three types of relationships. For example, A and/or B may represent three situations: A exists alone, A and B exist simultaneously, and B exists alone. The character "/" generally indicates that the associated objects are in an "or" relationship.

The term "multiple" in the embodiments of the present application refers to two or more, and other quantifiers are similar to it.

The solutions provided in the embodiments of the present application may be applicable to various systems, especially 5G systems. For example, the applicable systems may be the global system of mobile communication (GSM) system, code division multiple access (CDMA) system, wideband code division multiple access (WCDMA) general packet radio service (GPRS) system, long term evolution (LTE) system, LTE frequency division duplex (FDD) system, LTE time division duplex (TDD) system, long term evolution advanced (LTE-A) system, universal mobile telecommunication system (UMTS), global interoperability for microwave access (WiMAX) system, 5G new radio (NR) system, etc. These various systems include terminal devices and network devices. The system may also include a core network component, such as the evolved packet system (EPS), 5G system (5GS), etc.

The terminal device in the embodiments of the present application may be a device that provides voice and/or data connectivity to a user, a handheld device with a wireless connection function, or other processing devices connected to a wireless modem. In different systems, the names of the terminal device may be different. For example, in the 5G system, the terminal device may be called as a user equipment (UE). A wireless terminal device may communicate with one or more core networks (CNs) via a radio access network (RAN), and the wireless terminal device may be a mobile terminal device, such as a mobile phone (or cellular phone) and a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session-initiated protocol (SIP) phone, a wireless local loop (WLL) station, a personal digital assistant (PDA) and other devices. A wireless terminal device may also be called a system, a subscriber unit, a subscriber station, a mobile station, a mobile platform, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal. Depending on the specific scenario, the base station may be called an access point, or a device communicating with a wireless terminal device through one or more sectors on the air interface in the access network, or other names. The network device may be used for exchanging received air frames with internet protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), or may be a node B in a wide-band code division multiple access (WCDMA), or may be an evolutional NodeB (eNB or e-Node B) in a long term evolution (LTE) system, or may be a 5G gNB in 5G network architecture (next generation system), or may be a home evolved node B (HeNB), a relay node, a femto, or a pico, etc., which is not limited in the embodiments of the present application. In some network structures, the network device may include a centralized unit (CU) node and a distributed unit (DU) node, and the centralized unit and the distributed unit may be geographically separated.

The description of "transmission" involved in the embodiment of the present application means "transmitting" for the network device and "receiving" for the terminal.

The following provides a clear and complete description for the solutions in the embodiments of the present application in conjunction with the accompanying drawings. The described embodiments are only a part of the embodiments of the present application and not all of them. Based on the embodiments in the present application, all other embodiments obtained by those of ordinary skill in the art without creative labor fall within the scope of protection in the present application.

FIG. 5 is a schematic flow chart of a method for transmitting a service according to an embodiment of the present application. As shown in FIG. 5, the method is applied to a network device, and at least includes the following steps.

Step 501: transmitting first scheduling information to a terminal, where the first scheduling information is used to schedule a resource for transmitting a first data segment of a target service in a first scheduling mode.

The first scheduling mode may be CG scheduling or SPS, the first scheduling information may be CG scheduling information or SPS information. For example, the CG scheduling information may be DCI of CG scheduling, and the SPS information may be DCI of the SPS. The target service may be an XR service, which includes AR, MR, VR, etc. The first scheduling information may be triggered or periodic. The first scheduling information may be one piece of information or multiple pieces of information.

The first data segment of the target service is a subset of the data segment of the target service. Taking a network device as an example, the network device transmits the first scheduling information to the terminal, where the first scheduling information is used to schedule the resource for transmitting the first data segment of the target service, and the first data segment of the target service is transmitted in the first scheduling mode.

Step 502: configuring an association relationship between the first scheduling information and second scheduling information, and transmitting the second scheduling information to the terminal, where the second scheduling information is used to schedule a resource for transmitting a second data segment of the target service in a second scheduling mode.

The second scheduling mode may be DG scheduling, and the second scheduling information may be DG scheduling information. The second data segment of the target service is a subset of the data segment of the target service.

The network device configures the association relationship between the first scheduling information and the second scheduling information, and transmits the second scheduling information to the terminal, where the second scheduling information is used to schedule the resource for transmitting the second data segment of the target service, and the second data segment of the target service is transmitted in the second scheduling mode.

By establishing the association relationship between the first scheduling information and second scheduling information, after the first data segment of the target service is transmitted in the first scheduling mode, the second data segment of the target service may be transmitted in the second scheduling mode, and the situation where the resource configured by the first scheduling mode cannot complete the transmission of the entire data segment of the target service may be effectively avoided.

The association relationship between the first scheduling information and the second scheduling information may be established through a HARQ, a slot, an RNTI, a CG/SPS bit, etc.

For example, a first data segment of an XR service is transmitted through CG scheduling, a second data segment of the XR service is transmitted through DG scheduling, and an association relationship between CG scheduling information and DG scheduling information is established as: a CG HARQ process number is the same as a DG HARQ process number.

For example, a first data segment of an XR service is transmitted through CG scheduling, a second data segment of the XR service is transmitted through DG scheduling, and an association relationship between CG scheduling information and DG scheduling information is established as: a bit field of CG indicates that DG is used to transmit the XR service.

In the method for transmitting the service provided by embodiments of the present application, after transmitting the first scheduling information to the terminal and transmitting the first data segment of the target service in the first scheduling mode, the network device configures the association relationship between the first scheduling information and the second scheduling information and transmits the second scheduling information to the terminal, and the second data segment of the target service is transmitted in the second scheduling mode, the situation where the resource preconfigured by the first scheduling mode cannot completely transmit the entire data segment of the target service is avoided, the target service may be completely transmitted to the terminal, and the transmitting capacity of XR service is increased.

In an embodiment, configuring the association relationship between the first scheduling information and the second scheduling information includes:
configuring an association relationship between first parameter information of the first scheduling information and second parameter information of the second scheduling information.

The association relationship between the first scheduling information and the second scheduling information may be the association relationship between the first parameter information of the first scheduling information and the second parameter information of the second scheduling information.

The first scheduling information may include at least one of first uplink scheduling information or first downlink scheduling information, for example, DCI Format0-0, DCI Format0-1, DCI Format0-2, DCI Format1-0, DCI Format1-1, DCI Format1-2, DCI Format2-0, DCI Format2-1, DCI Format2-2, DCI Format2-3, DCI Format2-4, DCI Format2-5, DCI Format2-6, etc.

The first uplink scheduling information includes at least one of semi-static first uplink CG scheduling, or dynamic first uplink dynamic scheduling. The first downlink scheduling information includes at least one of semi-static first downlink SPS, or dynamic first downlink dynamic scheduling.

The first parameter information may be HARQ process information, and the HARQ process information includes at least one of a HARQ process number or the number of HARQ processes.

The second scheduling information may include at least one of second uplink scheduling information or second downlink scheduling information, for example, DCI Format0-0, DCI Format0-1, DCI Format0-2, DCI Format1-0, DCI Format1-1, DCI Format1-2, DCI Format2-0, DCI Format2-1, DCI Format2-2, DCI Format2-3, DCI Format2-4, DCI Format2-5, DCI Format2-6, etc.

The second uplink scheduling information includes at least one of semi-static second uplink CG scheduling, or dynamic second uplink dynamic scheduling. The downlink scheduling information includes at least one of semi-static second downlink SPS, or dynamic second downlink dynamic scheduling.

The second parameter information may be HARQ process information, and the HARQ process information includes at least one of a HARQ process number or the number of HARQ processes.

The first scheduling information is used to configure or schedule transmission of the target service, and the second scheduling information is used to configure or schedule the target service. The first scheduling information is used to indicate transmission of the first data segment of the target service, and the second scheduling information is used to indicate transmission of the first data segment of the target service. Both the first data segment and the second data segment are subsets of the data segment of the target service.

The association relationship between the first parameter information of the first scheduling information and the second parameter information of the second scheduling information may include the following.

### 1. Target function relationship.

The first parameter information and the second parameter information satisfy the target function relationship. The target function relationship may be defined as: *first parameter information = Function (second parameter information).* For example, *DG HARQ process number = Function (CG HARQ process number).*

The target function relationship may include the following.

Equal relationship. For example, the first parameter information is a HARQ process number of CG scheduling, the second parameter information is a HARQ process number of DG scheduling, and the HARQ process number of CG scheduling is the same as the HARQ process number of DG scheduling. For another example, the first parameter information is the number of HARQ processes of CG scheduling, the second parameter information is the number of HARQ processes of DG scheduling, and the number of HARQ processes of CG scheduling is the same as the number of HARQ processes of DG scheduling.

The first parameter information of the first scheduling information is an odd number, and the second parameter information of the second scheduling information is an even number. For example, the first parameter information is a HARQ process number of CG scheduling, which is an odd number, and the second parameter information is a HARQ process number of DG scheduling, which is an even number. For another example, the first parameter information is the number of HARQ processes of CG scheduling, which is an odd number, and the second parameter information is the number of HARQ processes of DG scheduling, which is an even number. The odd and even numbers may be determined by taking modulo with 2, where a result of "0" indicates an even number, and a result of "1" indicates an odd number.

The first parameter information of the first scheduling information is an even number, and the second parameter information of the second scheduling information is an odd number. For example, the first parameter information is a HARQ process number of CG scheduling, which is an even number, and the second parameter information is a HARQ process number of DG scheduling, which is an odd number. For another example, the first parameter information is the number of HARQ processes of CG scheduling, which is an even number, and the second parameter information is the number of HARQ processes of DG scheduling, which is an odd number.

2. The second scheduling information includes the first parameter information of the first scheduling information, the second parameter information of the second scheduling information, and/or the association relationship between the first parameter information of the first scheduling information and the second parameter information of the second scheduling information; and/or
the first scheduling information includes the first parameter information of the first scheduling information, the second parameter information of the second scheduling information, and/or the association relationship between the first parameter information of the first scheduling information and the second parameter information of the second scheduling information.

In an embodiment, the second scheduling information includes the first parameter information of the first scheduling information, the second parameter information of the second scheduling information, and/or the association relationship between the first parameter information and the second parameter information.

The first parameter information may be first HARQ process information corresponding to the first scheduling mode, and the second parameter information may be second HARQ process information corresponding to the second scheduling mode. The first HARQ process information includes at least one of a first HARQ process number or the number of the first HARQ processes. The second HARQ process information includes at least one of a second HARQ process number and the number of the second HARQ processes. Correspondingly, the association relationship between the first parameter information and the second parameter information may be as follows: the first HARQ process number is the same as the second HARQ process number; or the number of the first HARQ processes is the same as the number of the second HARQ processes; or the first HARQ process number is the same as the second HARQ process number and the number of the first HARQ processes is the same as the number of the second HARQ processes.

In an embodiment, M bits in the second scheduling information are used to indicate the first parameter information of the first scheduling information, the second parameter information of the second scheduling information, and/or the association relationship between the first parameter information and the second parameter information. In an embodiment, M1 bits are used to indicate the first parameter information of the first scheduling information, M2 bits are used to indicate the second parameter of the second scheduling information. The M1 bits may be a bit field indicated by a traditional HARQ process, or may be a parameter configuration indicated by an obtained HARQ process.

The M2 bits include at least one of the following: extended bits of a bit field indicated by a traditional HARQ process; newly defined bits; a parameter configuration for configuring an HARQ process; multiple DG scheduling process numbers, which are defined as a list and are indicated by an index, and the number of bits is used to indicate the index number; or obtained through a specific function relationship, where the specific function relationship may be a function relationship between the HARQ process number and time, a function relationship between the HARQ process number and the first parameter information, or a function relationship between the HARQ process number and the second parameter information.

The second scheduling information indicates the first parameter information and the second parameter information through M bits, and the M bits may be as follows: a bit field indicated by a traditional HARQ process; a parameter configuration indicated by an obtained HARQ process; extended bits of a bit field indicated by a traditional HARQ process; newly defined bits; a parameter configuration for configuring an HARQ process; multiple DG scheduling process numbers, which are defined as a list and are indicated by an index, and the number of bits is used to indicate the index number; or obtained through a specific function relationship, where the specific function relationship may be a function relationship between the HARQ process number and time, a function relationship between the HARQ process number and the first parameter information, a function relationship between the HARQ process number and the second parameter information, or a function relationship between the HARQ process number, the first parameter information and the second parameter information. M, M1, and M2 are all positive integers.

In an embodiment, taking the second scheduling information being DG scheduling information, the first scheduling information being CG scheduling information, and the first parameter information of the first scheduling information being the HARQ process number of CG scheduling as an example, the bits in the DG scheduling information that includes the CG HARQ process number is designed as follows: two HARQ process numbers are carried in the DG scheduling information, where an HARQ process number 1 is configured as the same HARQ process number as the CG scheduling, which represents that the DG scheduling is used to transmit the target service, and an HARQ process number 2 is configured as the same HARQ process number as the DG scheduling. The above design of bits may be adapted to the situation of retransmission or new transmission.

For example, a 4-bit HARQ process number is directly extended to 8 bits, where the first 4 bits are used to represent the HARQ process number 1, and the last 4 bits are used to represent the HARQ process number 2.

For example, the traditional 4 bits are used to represent the HARQ process number 1, and the other 4 bits are used to represent the HARQ process number 2.

In an embodiment, the first scheduling information includes the first parameter information of the first scheduling information, the second parameter information of the second scheduling information, and/or the association relationship between the first parameter information and the second parameter information.

The first parameter information may be the first HARQ process information, and the second parameter information may be the second HARQ process information. The first HARQ process information includes at least one of the first HARQ process number or the number of the first HARQ processes. The second HARQ process information includes at least one of the second HARQ process number or the number of the second HARQ processes. Correspondingly, the association relationship between the first parameter information and the second parameter information may be as follows: the first HARQ process number is the same as the second HARQ process number; or the number of the first HARQ processes is the same as the number of the second HARQ processes; or the first HARQ process number is the same as the second HARQ process number and the number of the first HARQ processes is the same as the number of the second HARQ processes.

In an embodiment, N bits in the first scheduling information are used to indicate the first parameter information of the first scheduling information, the second parameter information of the second scheduling information, and/or the association relationship between the first parameter information and the second parameter information. In an embodiment, N1 bits are used to indicate the first parameter information, and N2 bits are used to indicate the second parameter. The N1 bits may be a bit field indicated by a traditional HARQ process, or may be a parameter configuration indicated by an obtained HARQ process.

The N2 bits includes at least one of the following: extended bits of a bit field indicated by a HARQ process; newly defined bits; a parameter configuration for configuring an HARQ process; multiple DG scheduling process numbers, which are defined as a list and are indicated by an index, and the number of bits is used to indicate the index number; or obtained through a specific function relationship, where the specific function relationship may be a function relationship between the HARQ process number and time, a function relationship between the HARQ process number and the first parameter information, or a function relationship between the HARQ process number and the second parameter information.

The first scheduling information indicates the first parameter information and the second parameter information through N bits, and the N bits may be as follows: a bit field indicated by a traditional HARQ process; a parameter configuration indicated by an obtained HARQ process; extended bits of a bit field indicated by a traditional HARQ process; newly defined bits; a parameter configuration for configuring an HARQ process; multiple DG scheduling process numbers, which are defined as a list and are indicated by an index, and the number of bits is used to indicate the index number; or obtained through a specific function relationship, where the specific function relationship may be a function relationship between the HARQ process number and time, a function relationship between the HARQ process number and the first parameter information, a function relationship between the HARQ process number and the second parameter information, or a function relationship between the HARQ process number, the first parameter information and the second parameter information. N, N1, and N2 are all positive integers.

In an embodiment, both the first scheduling information and the second scheduling information include the first parameter information of the first scheduling information, the second parameter information of the second scheduling information, and/or the association relationship between the first parameter information and the second parameter information.

After the above configuration is performed, the network device transmits the first scheduling information to the terminal to transmit the first data segment of the target service in the first scheduling mode; and the network device transmits the second scheduling information to the terminal to transmit the second data segment of the target service in the second scheduling mode. The transmitting of the entire data segment of the target service is completed.

In case that the transmitting of the second data segment of the target service indicated by the second scheduling information is a retransmission of the first data segment of the target service indicated by the first scheduling information, the configuration of the second parameter information of the second scheduling information is the same as that of the first parameter information of the first scheduling information. Therefore, whether it is a new transmission or a retransmission may be determined by comparing the first parameter information with the second parameter information.

For example, the HARQ process number is used for determination. In case of retransmission, the configuration of the HARQ process number of the second scheduling information is the same as that of the HARQ process number of the first scheduling information. In case of new transmission, the HARQ process number of the second scheduling information may be configured through 4 bits of the HARQ process, or may be determined by a calculation mode for the HARQ process number of the first scheduling mode.

In the method for transmitting the service provided by embodiments of the present application, by configuring the association relationship between the first parameter information of the first scheduling information and the second parameter information of the second scheduling information, the network device transmits the first data segment of the target service in the first scheduling mode corresponding to the first scheduling information, transmits the second data segment of the target service in the second scheduling mode corresponding to the second scheduling information, and the transmitting of the entire data segment of the target service is completed.

In an embodiment, configuring the association relationship between the first scheduling information and the second scheduling information includes:
the first scheduling information indicates that the second scheduling information is used to transmit the target service.

The association relationship between the first scheduling information and the second scheduling information may include:
the first scheduling information indicates that the second scheduling information is used to transmit the target service.

The first scheduling information may include at least one of first uplink scheduling information or first downlink scheduling information, for example, DCI Format0-0, DCI Format0-1, DCI Format0-2, DCI Format1-0, DCI Format1-1, DCI Format1-2, DCI Format2-0, DCI Format2-1, DCI Format2-2, DCI Format2-3, DCI Format2-4, DCI Format2-5, DCI Format2-6, etc.

The first uplink scheduling information includes at least one of semi-static first uplink CG scheduling, or dynamic first uplink dynamic scheduling. The downlink scheduling information includes at least one of semi-static first downlink SPS, or dynamic first downlink dynamic scheduling.

The first parameter information may be HARQ process information, and the HARQ process information includes at least one of a HARQ process number or the number of HARQ processes.

The second scheduling information may include at least one of second uplink scheduling information or second downlink scheduling information, for example, DCI Format0-0, DCI Format0-1, DCI Format0-2, DCI Format1-0, DCI Format1-1, DCI Format1-2, DCI Format2-0, DCI Format2-1, DCI Format2-2, DCI Format2-3, DCI Format2-4, DCI Format2-5, DCI Format2-6, etc.

The second uplink scheduling information includes at least one of semi-static second uplink CG scheduling, or dynamic second uplink dynamic scheduling. The downlink scheduling information includes at least one of semi-static second downlink SPS, or dynamic second downlink dynamic scheduling.

The second parameter information may be HARQ process information, and the HARQ process information includes at least one of a HARQ process number or the number of HARQ processes.

The first scheduling information indicates that the second scheduling information is used to transmit the target service. For example, indication information is carried in the first scheduling information, where the indication information indicates that the second scheduling information is used to transmit the target service. For another example, a fixed HARQ process number is carried in both the second scheduling information and the first scheduling information, and it is determined that the second scheduling information is used to transmit the target service through the fixed HARQ process number. For another example, the first scheduling information indicates that the second scheduling information is used to transmit the target service at a specific point of time or during a specific period of time. For another example, the first scheduling information indicates that the second scheduling information is used to transmit the target service through a certain bit field.

In the method for transmitting the service provided by embodiments of the present application, by configuring the first scheduling information indicates the second scheduling information is used to transmit the target service, after transmitting the first data segment of the target service in the first scheduling mode corresponding to the first scheduling information, the network device transmits the second data segment of the target service in the second scheduling mode corresponding to the second scheduling information, the transmitting for the entire data segment of the target service is completed, and the transmitting capacity of XR service is increased.

In an embodiment, the first scheduling information indicates that the second scheduling information is used to transmit the target service includes:
the first scheduling information carries first indication information, where the first indication information is used to indicate that the second scheduling information is used to transmit the target service.

An implementation in which the first scheduling information indicates that the second scheduling information is used to transmit the target service is: the first scheduling information carries the first indication information, where the first indication information is used to indicate that the second scheduling information is used to transmit the target service.

In an embodiment, the first indication information may be configured or scheduled through a specific bit field in the first scheduling information. For example, the first scheduling information is CG scheduling information, the second scheduling information is DG scheduling information, and correspondingly, the first scheduling mode is CG scheduling, the second scheduling information is DG scheduling. The target service is an XR service. In the bit field of CG scheduling, it is defined that a bit field includes the first indication information, and the first indication information is used to indicate that subsequent DG scheduling is used to transmit the XR service. The DCI that carries the CG scheduling of the bit field may be DCI that activates a certain CG scheduling, or may be periodic DCI after a certain CG scheduling is activated.

In an embodiment, the first indication information is configured or scheduled through a certain bit field in first data information of the first scheduling information. For example, the first scheduling information is CG scheduling information, the second scheduling information is DG scheduling information, and correspondingly, the first scheduling mode is CG scheduling, the second scheduling mode is DG scheduling. The target service is an XR service. For a certain CG PUSCH, the first indication information is carried in a bit field in the PUSCH, and indicates that the subsequent DG scheduling is used to transmit the XR service. The DCI that carries the CG scheduling of the bit field may be DCI that activates a certain CG scheduling, or may be periodic DCI after a certain CG scheduling is activated.

In an embodiment, the first indication information may be further used to indicate that the second scheduling information is used to transmit the target service.

During the transmitting procedure of the target service, when a service with an equivalent priority or a higher priority needs to be transmitted, or a conflict in service priority is avoided, for example, the conflict in resource when both XR service and URLLC exist, the first indication information is further used to indicate that whether the second scheduling information is used to transmit the target service.

In an embodiment, the specific bit field in the second scheduling information is used to configure whether the second scheduling information is used to transmit services other than the target service. In case that the transmitted second data segment of the target service indicated by the second scheduling information is a retransmission of the transmitted first data segment of the target service indicated by the first scheduling information, the configuration of the second parameter information of the second scheduling information is the same as that of the first parameter information of the first scheduling information. In case that the second scheduling information is used to transmit the second data segment of the target service, the second parameter information of the second scheduling information may be configured by K bits; or may be obtained through a specific function relationship, where the function relationship may be the function relationship between the HARQ process number and time, a function relationship between the HARQ process number and the first parameter information, a function relationship between the HARQ process number and the second parameter information, or a function relationship between the HARQ process number, the first parameter information and the second parameter information

In the method for transmitting the service provided by embodiments of the present application, by carrying the first indication information in the first scheduling information, when a conflict in transmitting resources of a service occurs, or occurrence of a conflict in transmitting resources of a service is avoided, the first indication information is further used to indicate whether the second scheduling information is used to transmit the target service, which solves the conflict in resources caused by transmitting different services.

In an embodiment, the second scheduling information further carries specific parameter information, where the specific parameter information is used to indicate that the second scheduling information is used to transmit the target service.

The second scheduling information further carries the specific parameter information, where the specific parameter information is used to indicate that the second scheduling information is used to transmit the target service. The specific parameter information may be information that satisfies a certain function relationship, for example, the first parameter information is an even number and the second parameter information is an odd number, the first parameter information is an odd number and the second parameter information is an even number, a function relationship of the first parameter information of the first scheduling information, a function relationship of the second parameter information of the second scheduling information, a function relationship between the first parameter information and the second parameter information, a time function relationship, etc. The specific parameter information may also be represented as a fixed HARQ process number dedicated for a target service.

In an embodiment, the network device may configure that the first scheduling information carries the above specific parameter information.

In an embodiment, the network device may also configure that both the first scheduling information and the second scheduling information carry the above specific parameter information.

In an embodiment, the first scheduling information indicates that the second scheduling information is used to transmit the target service includes:
the first scheduling information indicates that the second scheduling information satisfying a predetermined condition is used to transmit the target service.

The first scheduling information indicates that the second scheduling information satisfying the predetermined condition is used to transmit the target service. In addition, when a conflict in service priority occurs, or occurrence of a conflict in service priority is avoided, the first scheduling information is further used to indicate whether the second scheduling information satisfying the predetermined condition is used to transmit the target service.

In an embodiment, the first scheduling information indicates whether the second scheduling information is used to transmit the target service through a certain bit field. In addition, considering the situation that the resource configured by the first scheduling information may transmit the entire data segment of the target service, the first scheduling information may also indicate whether the second scheduling information need to be transmitted through a certain bit field to transmit the target service.

In an embodiment, the predetermined condition includes:
the first scheduling information is transmitted at a first timing for indicating transmitting the second scheduling information at a second timing, and the second scheduling information is used to transmit the target service; or
the first scheduling information is transmitted at a first timing for indicating transmitting the second scheduling information during a first time period, and the second scheduling information is used to transmit the target service.

In addition to indicating whether the second scheduling information is used to transmit the target service, indicating whether the second scheduling information used to transmit the target service is transmitted, indicating that the second scheduling information is used to transmit the target service, the first scheduling information may also indicate a time relationship of transmitting between the first scheduling information and the second scheduling information.

For example, the first scheduling information is transmitted at the first timing for indicating transmitting the second scheduling information at the second timing, and the second scheduling information being used to transmit the target service.

For example, the first scheduling information is transmitted at the first timing for indicating transmitting the second scheduling information during the first time period, and the second scheduling information being used to transmit the target service.

For example, the first scheduling information is transmitted at the first timing for indicating deactivation of transmitting the second scheduling information at the second timing.

For example, the first scheduling information is transmitted at the first timing for indicating deactivation of transmitting the second scheduling information during the first time period.

For example, the first scheduling information is transmitted at timing N for indicating activation/deactivation of transmitting the second scheduling information at timing N+X.

For example, the first scheduling information is transmitted at timing N, for indicating activation/deactivation of transmitting the second scheduling information in a time window of [N+X, N+Y], where N, X and Y each represent a time point.

In an embodiment, the method further includes:
configuring the first scheduling information to indicate, by a second bit field, a resource type of the second scheduling information for transmitting the target service.

The resource type for the second scheduling information for transmitting the target service through the second bit field in the first scheduling information includes at least one of the following: a time domain resource, a frequency domain resource, a spatial domain resource, or a code domain resource.

In an embodiment, the time domain resource for the second scheduling information for transmitting the target service is indicated by the second bit field in the first scheduling information. For example, the first scheduling information is transmitted at the first timing, for indicating that the time domain resource at the second timing is used to transmit the second scheduling information. For example, the first scheduling information is transmitted at the first timing, for indicating that the time domain resource S at the second timing is used to transmit the second scheduling information, where the time domain resource S may be a slot, or may be a symbol. For example, the first scheduling information is transmitted at the first timing, for indicating that the time domain resource within the first time period is used to transmit the second scheduling information.

In an embodiment, the frequency domain resource for the second scheduling information for transmitting the target service is indicated by the second bit field in the first scheduling information. For example, the first scheduling information is transmitted over a frequency domain resource B, for indicating that a frequency domain resource C is used to transmit the second scheduling information, where the frequency domain resource B and frequency domain resource C may or may not overlap. For example, the first scheduling information is transmitted over a frequency domain resource B, for indicating that a frequency domain resource within the range of [C+K, C+L] is used to transmit the second scheduling information, where the range of [C+K, C+L] and the frequency domain resource B may or may not overlap. The frequency domain resource may include a resource element (RE), a resource block (RB), a resource element group (REG), a resource block group (RBG), BWP, a carrier, etc.

In an embodiment, the spatial domain resource for the second scheduling information for transmitting the target service is indicated by the second bit field in the first scheduling information. For example, the first scheduling information is transmitted over a spatial domain resource E, for indicating that a spatial domain resource F is used to transmit the second scheduling information. The spatial domain resource may include an antenna unit, an antenna panel, a port number, etc.

In an embodiment, the code domain resource for the second scheduling information for transmitting the target service is indicated by the second bit field in the first scheduling information. For example, the first scheduling information is transmitted over a first code domain resource, for indicating that a second code domain resource is used to transmit the second scheduling information. The code domain resource may include a random codeword, a pseudo-random codeword, a Gold code, a Hash code, an M sequence, etc.

In an embodiment, the second scheduling information may be scrambled by a target RNTI, where the target RNTI represents that the second scheduling information is used to transmit the target service.

In an embodiment, the second scheduling information is configured through a target search space, where the target search space is used to transmit the target service.

In an embodiment, the network device may group search spaces, where the target search space is used to transmit the target service.

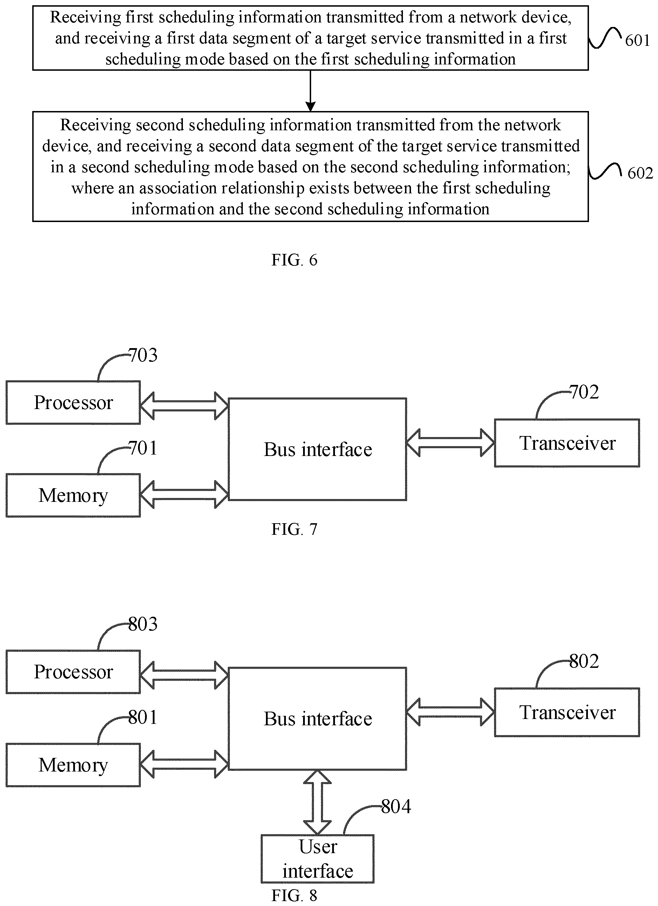

FIG. 6 is a schematic flow chart of a method for receiving a service according to an embodiment of the present application. As shown in FIG. 6, the method is applied to a terminal, and the method includes at least the following steps.

Step 601: receiving first scheduling information transmitted from a network device, and receiving a first data segment of a target service transmitted in a first scheduling mode based on the first scheduling information.

Step 602: receiving second scheduling information transmitted from the network device, and receiving a second data segment of the target service transmitted in a second scheduling mode based on the second scheduling information, where an association relationship exists between the first scheduling information and the second scheduling information.

Regarding the transmission of the target service, the network device transmits the target service, and the terminal receives the target service. The terminal receives the first scheduling information and the second scheduling information transmitted from the network device, and the network device establishes the association relationship between the first scheduling information and the second scheduling information, and both the first scheduling information and the second scheduling information are used to transmit the target service. The terminal receives the target service of the entire data segment.

The first scheduling mode may be CG scheduling or SPS, the first scheduling information may be CG scheduling information or SPS information. For example, the CG scheduling information may be DCI of CG scheduling, and the SPS information may be DCI of SPS. The target service may be an XR service, which includes AR, MR, VR, etc. The first scheduling information may be triggered or periodic. The first information may be one piece of information or multiple pieces of information. The first data segment and the second data segment of the target service are subsets of the data segment of the target service.

The association relationship between the first scheduling information and the second scheduling information may be established through a HARQ, a slot, an RNTI, a CG/SPS bit, etc.

In the method for receiving the service provided by embodiments of the present application, the terminal receives the first scheduling information transmitted from the network device, and receives the first data segment of the target service based on the first scheduling information; and the terminal receives the second scheduling information transmitted from the network device, and receives the second data segment of the target service based on the second scheduling information. Through the association relationship configured by the network device between the first scheduling information and the second scheduling information, the terminal receives the second data segment of the target service based on the second scheduling information in the situation where the received first data segment of the target service is not a complete data segment of the target service, thereby the capacity of received target service is expanded.

In an embodiment, the association relationship exists between the first scheduling information and the second scheduling information includes:
an association relationship exists between first parameter information of the first scheduling information and second parameter information of the second scheduling information.

In an embodiment, the association relationship between the first parameter information and the second parameter information includes a target function relationship.

In an embodiment, the target function relationship includes:
an equal relationship; or
the first parameter information of the first scheduling information is an odd number, and the second parameter information of the second scheduling information is an even number; or
the first parameter information of the first scheduling information is an even number, and the second parameter information of the second scheduling information is an odd number.

The first parameter information and the second parameter information satisfy the target function relationship. The target function relationship may be defined as: *first parameter information* = *Function (second parameter information).* For example, *DG HARQ process number* = *Function (CG HARQ process number).*

The target function relationship may include the following relationship.

An equal relationship. For example, the first parameter information is a HARQ process number of CG scheduling, the second parameter information is a HARQ process number of DG scheduling, and the HARQ process number of CG scheduling is the same as the HARQ process number of DG scheduling. For another example, the first parameter information is the number of HARQ processes of CG scheduling, the second parameter information is the number of HARQ processes of DG scheduling, and the number of HARQ processes of CG scheduling is the same as the number of HARQ processes of DG scheduling.

The first parameter information of the first scheduling information is an odd number, and the second parameter information of the second scheduling information is an even number. For example, the first parameter information is a HARQ process number of CG scheduling, which is an odd number, and the second parameter information is a HARQ process number of DG scheduling, which is an even number. For another example, the first parameter information is the number of HARQ processes of CG scheduling, which is an odd number, and the second parameter information is the number of HARQ processes of DG scheduling, which is an even number. The odd and even numbers may be determined by taking modulo with 2, where a result of "0" indicates an even number, and a result of "1" indicates an odd number.

The first parameter information of the first scheduling information is an even number, and the second parameter information of the second scheduling information is an odd number. For example, the first parameter information is a HARQ process number of CG scheduling, which is an even number, and the second parameter information is a HARQ process number of DG scheduling, which is an odd number. For another example, the first parameter information is the number of HARQ processes of CG scheduling, which is an even number, and the second parameter information is the number of HARQ processes of DG scheduling, which is an odd number.

In an embodiment, the second scheduling information includes the first parameter information of the first scheduling information, the second parameter information of the second scheduling information, and/or the association relationship between the first parameter information and the second parameter information.

The first parameter information may be first HARQ process information corresponding to the first scheduling mode, and the second parameter information may be second HARQ process information corresponding to the second scheduling mode. The first HARQ process information includes at least one of a first HARQ process number or the number of the first HARQ processes. The second HARQ process information includes at least one of a second HARQ process number and the number of the second HARQ processes. Correspondingly, the association relationship between the first parameter information and the second parameter information may be as follows: the first HARQ process number is the same as the second HARQ process number; or the number of the first HARQ processes is the same as the number of the second HARQ processes; or the first HARQ process number is the same as the second HARQ process number and the number of the first HARQ processes is the same as the number of the second HARQ processes.

In an embodiment, the first scheduling information includes the first parameter information of the first scheduling information, the second parameter information of the second scheduling information, and/or the association relationship between the first parameter information and the second parameter information.

The first parameter information may be the first HARQ process information, and the second parameter information may be the second HARQ process information. The first HARQ process information includes at least one of the first HARQ process number or the number of the first HARQ processes. The second HARQ process information includes at least one of the second HARQ process number or the number of the second HARQ processes. Correspondingly, the association relationship between the first parameter information and the second parameter information may be as follows: the first HARQ process number is the same as the second HARQ process number; or the number of the first HARQ processes is the same as the number of the second HARQ processes; or the first HARQ process number is the same as the second HARQ process number and the number of the first HARQ processes is the same as the number of the second HARQ processes.

In an embodiment, both the first scheduling information and the second scheduling information include the first parameter information of the first scheduling information, the second parameter information of the second scheduling information, and/or the association relationship between the first parameter information and the second parameter information.

Through the above association relationship, the terminal receives the first data segment of the target service transmitted in the first scheduling mode and the second data segment of the target service transmitted in the second scheduling mode, the entire data segment of the target service is received and the capacity of received target service is increased.

In an embodiment, the first parameter information is HARQ process information corresponding to the first scheduling mode, and the second parameter is HARQ process information corresponding to the second scheduling mode.

In an embodiment, the HARQ process information includes an HARQ process number or the number of HARQ processes.

In an embodiment, the association relationship exists between the first scheduling information and the second scheduling information includes:
the first scheduling information indicates that the second scheduling information is used to receive the target service.

The first scheduling information indicates that the second scheduling information is used to receive the target service. For example, indication information is carried in the first scheduling information where the indication information indicates that the second scheduling information is used to receive the target service. For another example, a fixed HARQ process number is carried in the second scheduling information and the first scheduling information, and it is determined that the second scheduling information is used to receive the target service through the fixed process number. For another example, the first scheduling information indicates that the second scheduling information is used to receive the target service at a specific point of time or during a specific period of time. For another example, the first scheduling information indicates that the second scheduling information is used to receive the target service through a certain bit field.

In an embodiment, the first scheduling information indicates that the second scheduling information is used to receive the target service includes:
the first scheduling information carries first indication information, where the first indication information is used to indicate that the second scheduling information is used to receive the target service.

In an embodiment, the first indication information is further used to indicate whether the second scheduling information is used to receive the target service.

During the receiving procedure of the target service, when a service with an equivalent priority or a higher priority needs to be received, or a conflict in service priority is avoided, for example, the conflict in resource when both XR service and URLLC are present, the first indication information is further used to indicate that whether the second scheduling information is used to receive the target service.

In an embodiment, a specific bit field in the second scheduling information is used to configure whether the second scheduling information is used to receive services other than the target service.

In an embodiment, the second scheduling information further carries specific parameter information, where the specific parameter information is used to indicate that the second scheduling information is used to receive the target service.

In an embodiment, the first scheduling information carries the above specific parameter information.

In an embodiment, both the first scheduling information and the second scheduling information carry the above specific parameter information.

The specific parameter information may be information that satisfies a certain function relationship, for example, the first parameter information is an even number and the second parameter information is an odd number, the first parameter information is an odd number and the second parameter information is an even number, a function relationship of the first parameter information of the first scheduling information, a function relationship of the second parameter information of the second scheduling information, a function relationship between the first parameter information and the second parameter information, a time function relationship, etc. The specific parameter information may also be represented as a dedicated HARQ process number for a fixed target service.

In an embodiment, the first scheduling information indicates that the second scheduling information is used to receive the target service includes:
the first scheduling information indicates that the second scheduling information satisfying a predetermined condition is used to receive the target service.

The first scheduling information indicates that the second scheduling information satisfying the predetermined condition is used to receive the target service. In addition, when a conflict in service priority occurs, or occurrence of a conflict in service priority is avoided, the first scheduling information is further used to indicate whether the second scheduling information satisfying the predetermined condition is used to receive the target service.

In an embodiment, the first scheduling information indicates whether the second scheduling information is used to receive the target service through a certain bit field. In addition, considering the situation that the resource configured by the first scheduling information may receive the entire data segment of the target service, the first scheduling information may also indicate whether the second scheduling information need to be transmitted through a certain bit field to receive the target service.

In an embodiment, the predetermined condition includes:
the first scheduling information is transmitted at a first timing for indicating transmitting the second scheduling information at a second timing, and the second scheduling information is used to receive the target service; or
the first scheduling information is transmitted at a first timing for indicating transmitting the second scheduling information during a first time period, and the second scheduling information is used to receive the target service.

In addition to indicating whether the second scheduling information is used to receive the target service, indicating whether the second scheduling information used to transmit the target service is received, indicating that the second scheduling information is used to receive the target service, the first scheduling information may also indicate a time relationship of receiving between the first scheduling information and the second scheduling information.

In an embodiment, the first scheduling information indicates a resource type for the second scheduling information for receiving through a second bit field.

The resource type includes at least one of the following: a time domain resource, a frequency domain resource, a spatial domain resource, or a code domain resource.

In an embodiment, the second scheduling information is configured through a target search space, where the target search space is used to receive the target service.

In an embodiment, the second scheduling information may be scrambled by a target RNTI, where the target RNTI represents that the second scheduling information is used to receive the target service.

The solutions of the embodiments of the present application are further introduced below through several examples.

Example 1: an association relationship between an HARQ process of CG and an HARQ process of DG is present.

DG DCI carries an HARQ process number of the newly transmitted CG scheduling which is associated with the DG DCI, and the obtaining mode of the HARQ process number of the DG remains unchanged.

CG scheduling is used to transmit the XR service, and DG scheduling is used to transmit the remaining XR service that CG does not finish transmitting.

Example 2: an association relationship between an HARQ process of CG and an HARQ process of DG is present.

CG DCI carries an HARQ process number of DG which is associated with the CG DCI.

CG scheduling is used to transmit the XR service, and DG scheduling is used to transmit the remaining XR service that CG does not finish transmitting.

CG DCI carries the HARQ process number of DG.

CG DCI configures an HARQ process number 1, which is used to indicate a HARQ process number of CG scheduling; and an HARQ process number 2, which is used to indicate the subsequent HARQ process number of DG scheduling.

If multiple DG scheduling are needed, CG may carry multiple HARQ process numbers of DG, and the multiple HARQ process numbers of DG scheduling may be indicated through the following modes:
I. extending a bit number of the HARQ;
II. defining the multiple HARQ process numbers of DG as a list, and indicating by an index; or
III. the CG DCI only carries the first HARQ process number of DG, and the subsequent HARQ process number of DG scheduling may be dynamically indicated by previous DG DCI.

Example III: A bit field in CG DCI is configured to indicate whether DG DCI is used to transmit the XR service, and it is determined whether it is a new transmission or a retransmission in combination with an HARQ process number of DG.

CG scheduling is used to transmit the XR service, and DG scheduling is used to transmit the remaining XR service that CG does not finish transmitting.

CG DCI carries 1 bit, which is used to indicate that the subsequent DG scheduling is used to transmit the XR service.

Retransmission: an HARQ process number of DG scheduling is configured the same as an HARQ process number of CG.

New transmission: the HARQ process number of DG scheduling is configured through a traditional 4-bit HARQ process, or may be obtained through a calculation mode of the HARQ process number of CG.

Example 4: it is indicated in DG DCI whether DG scheduling is used to transmit the XR service, and it is determined whether it is a new transmission or a retransmission in combination with an HARQ process number of CG.

CG scheduling is used to transmit the XR service, and DG scheduling is used to transmit the remaining XR service that CG does not finish transmitting.

DG DCI carries 1 bit, which is used to indicate that the DG DCI is used to transmit the XR service.

Retransmission: an HARQ process number of DG scheduling is configured the same as an HARQ process number of CG scheduling.

New transmission: the HARQ process number of DG scheduling is configured through a traditional 4-bit HARQ process, or may be obtained through a calculation mode of the HARQ process number of CG.

Example 5: a fixed process number is configured as a dedicated process number for XR service.

After a certain CG takes effect, it is configured that: *HARQ_ID_DG=Function(HARQ ID CG).* For example, *HARQ_ID_CG* is an odd number, and *HARQ_ID_DG* is an even number. For another example, *HARQ_ID_CG* is an even number, and *HARQ_ID_DG* is an odd number. For another example, *HARQ_ID_CG* and *HARQ_ID_DG* satisfy a specific function relationship.

Example 6: a trigger bit is configured in CG DCI, and is used to indicate the DG after the CG is used to schedule the XR service.

1 bit in CG DCI is used to activate/deactivate monitoring timing of DG DCI.

For example, 1 bit in the CG DCI at timing N is used to activate the DG DCI at timing N+X, and indicate whether it is used to schedule the XR service.

For example, 1 bit in the CG DCI at timing N+X is used to indicate the DG DCI at timing N+X+K to deactivate the scheduling of the XR service.

1 bit in the CG DCI is used to activate/deactivate a monitoring time window of the DG DCI.

For example, 1 bit in the CG DCI at timing N indicates whether to monitor the DG DCI being used to schedule the XR service within the time window [N+X, N+Y],

For XR service, after transmitting/receiving of CG/SPS scheduling, a DG scheduling that is associated with the CG/SPS scheduling is established to schedule the remaining packet of the XR service. For example, an association relationship is established through an HARQ, a slot, an RNTI, a CG/SPS scheduling bit, etc., so that the XR service may be recognized through DCI and its related parameters, a UE receives the XR service over the resource allocated by the DCI. The resource collision with services of the same priority is avoided, the reception/transmission integrity problem of one packet with different QOS due to the multi-stream characteristic of XR service packet is avoided, and the capacity of receiving/transmitting XR service is further improved.

FIG. 7 is a schematic structural diagram of a network device according to an embodiment of the present application. As shown in FIG. 7, the network device includes a memory 701, a transceiver 702, and a processor 703,
where the memory 701 is used for storing a computer program; and the transceiver 702 is used for receiving and transmitting data under control of the processor 703.

The transceiver 702 is used for receiving and transmitting data under control of the processor 703.

In FIG. 7, the bus architecture may include any number of interconnected buses and bridges, one or more processors represented by processor 703 and various circuits of the memory represented by memory 701 are linked together. The bus architecture may also link together various other circuits such as peripherals, voltage regulators, and power management circuits, which are all well known in the art and therefore are not described further herein. The bus interface provides an interface. The transceiver 702 may include multiple elements, including a transmitter and a receiver, providing a unit for communicating with various other devices over transmission media, including wireless channels, wired channels, optical cables, and other transmission media. The processor 703 is responsible for managing the bus architecture and general processing, and the memory 701 may store data used by the processor 703 when performing operations.

In an embodiment, the processor 703 may be a central processing unit (CPU), an application specific integrated circuit (ASIC), a field-programmable gate array (FPGA) or a complex programmable logic device (CPLD), the processor may also adopt a multi-core architecture.

The processor 703 is used for reading the computer program in the memory 701 and executing the following operations:
transmitting first scheduling information to a terminal, where the first scheduling information is used to schedule a resource for transmitting a first data segment of a target service in a first scheduling mode; and
configuring an association relationship between the first scheduling information and second scheduling information, and transmitting the second scheduling information to the terminal, where the second scheduling information is used to schedule a resource for transmitting a second data segment of the target service in a second scheduling mode.

In an embodiment, configuring the association relationship between the first scheduling information and the second scheduling information includes:
configuring an association relationship between first parameter information of the first scheduling information and second parameter information of the second scheduling information.

In an embodiment, the association relationship between the first parameter information of the first scheduling information and the second parameter information of the second scheduling information includes:
the association relationship between the first parameter information and the second parameter information is a target function relationship.

In an embodiment, the target function relationship includes:
an equal relationship; or
the first parameter information of the first scheduling information is an odd number, and the second parameter information of the second scheduling information is an even number; or
the first parameter information of the first scheduling information is an even number, and the second parameter information of the second scheduling information is an odd number.

In an embodiment, the second scheduling information includes the first parameter information of the first scheduling information, the second parameter information of the second scheduling information, and/or the association relationship between the first parameter information of the first scheduling information and the second parameter information of the second scheduling information; and/or
the first scheduling information includes the first parameter information of the first scheduling information, the second parameter information of the second scheduling information, and/or the association relationship between the first parameter information of the first scheduling information and the second parameter information of the second scheduling information.

In an embodiment, the first parameter information is HARQ process information corresponding to the first scheduling mode, and the second parameter is HARQ process information corresponding to the second scheduling mode.

In an embodiment, the HARQ process information includes an HARQ process number or the number of HARQ processes.

In an embodiment, configuring the association relationship between the first scheduling information and the second scheduling information includes:
the first scheduling information indicates that the second scheduling information is used to transmit the target service.

In an embodiment, the first scheduling information indicates that the second scheduling information is used to transmit the target service includes:
the first scheduling information carries first indication information, where the first indication information is used to indicate that the second scheduling information is used to transmit the target service.

In an embodiment, the first indication information is further used to indicate whether the second scheduling information is used to transmit the target service.

In an embodiment, the second scheduling information further carries specific parameter information, where the specific parameter information is used to indicate that the second scheduling information is used to transmit the target service.

In an embodiment, the first scheduling information indicates that the second scheduling information is used to transmit the target service includes:
the first scheduling information indicates that the second scheduling information satisfying a predetermined condition is used to transmit the target service.

In an embodiment, the predetermined condition includes:
the first scheduling information is transmitted at a first timing for indicating transmitting the second scheduling information at a second timing, and the second scheduling information is used to transmit the target service; or
the first scheduling information is transmitted at a first timing for indicating transmitting the second scheduling information during a first time period, and the second scheduling information is used to transmit the target service.

In an embodiment, the operations further include:
configuring the first scheduling information to indicate, by a second bit field, a resource type of the second scheduling information for transmitting the target service.

In an embodiment, the second scheduling information is configured through a target search space, where the target search space is used to transmit the target service.

It should be noted that the network device provided in the embodiments of the present application may achieve all the method steps implemented in the above method embodiments applied to the network device and achieve the same technical effect. Therefore, the same parts and beneficial effects as in the method embodiments of the present application are not elaborated in detail.

FIG. 8 is a schematic structural diagram of a terminal according to an embodiment of the present application. As shown in FIG. 8, the terminal includes a memory 801, a transceiver 802, and a processor 803,
where the memory 801 is used for storing a computer program; and the transceiver 802 is used for receiving and transmitting data under control of the processor 803.

The transceiver 802 is used for receiving and transmitting data under control of the processor 803.

In FIG. 8, the bus architecture may include any number of interconnected buses and bridges, one or more processors represented by processor 803 and various circuits of the memory represented by memory 801 are linked together. The bus architecture may also link together various other circuits such as peripherals, voltage regulators, and power management circuits, which are all well known in the art and therefore are not described further herein. The bus interface provides an interface. The transceiver 802 may include multiple elements, including a transmitter and a receiver, providing a unit for communicating with various other devices over transmission media, including wireless channels, wired channels, optical cables, and other transmission media. For different user devices, a user interface 804 may also be an interface that is able to connect external and internal devices, including but not limited to small keyboards, displays, speakers, microphones, joysticks, etc.

The processor 803 is responsible for managing the bus architecture and general processing, and the memory 801 may store data used by the processor 803 when performing operations.

In an embodiment, the processor 803 may be a central processing unit (CPU), an application specific integrated circuit (ASIC), a field-programmable gate array (FPGA) or a complex programmable logic device (CPLD), the processor may also adopt a multi-core architecture.

The processor 803 is used for reading the computer program in the memory 801 and executing the following operations:
receiving first scheduling information transmitted from a network device, and receiving a first data segment of a target service transmitted in a first scheduling mode based on the first scheduling information; and
receiving second scheduling information transmitted from the network device, and receiving a second data segment of the target service transmitted in a second scheduling mode based on the second scheduling information, where an association relationship exists between the first scheduling information and the second scheduling information.

In an embodiment, the association relationship exists between the first scheduling information and the second scheduling information includes:
an association relationship exists between first parameter information of the first scheduling information and second parameter information of the second scheduling information.

In an embodiment, the association relationship between the first parameter information and the second parameter information includes a target function relationship.

In an embodiment, the target function relationship includes:
an equal relationship; or
the first parameter information of the first scheduling information is an odd number, and the second parameter information of the second scheduling information is an even number; or
the first parameter information of the first scheduling information is an even number, and the second parameter information of the second scheduling information is an odd number.

In an embodiment, the second scheduling information includes the first parameter information of the first scheduling information, the second parameter information of the second scheduling information, and/or the association relationship between the first parameter information of the first scheduling information and the second parameter information of the second scheduling information; and/or
the first scheduling information includes the first parameter information of the first scheduling information, the second parameter information of the second scheduling information, and/or the association relationship between the first parameter information of the first scheduling information and the second parameter information of the second scheduling information.

In an embodiment, the first parameter information is HARQ process information corresponding to the first scheduling mode, and the second parameter is HARQ process information corresponding to the second scheduling mode.

In an embodiment, the HARQ process information includes an HARQ process number or the number of HARQ processes.

In an embodiment, the association relationship exists between the first scheduling information and the second scheduling information includes:
the first scheduling information indicates that the second scheduling information is used to receive the target service.

In an embodiment, the first scheduling information indicates that the second scheduling information is used to receive the target service includes:
the first scheduling information carries first indication information, where the first indication information is used to indicate that the second scheduling information is used to receive the target service.

In an embodiment, the first indication information is further used to indicate whether the second scheduling information is used to receive the target service.

In an embodiment, the second scheduling information further carries specific parameter information, where the specific parameter information is used to indicate that the second scheduling information is used to receive the target service.

In an embodiment, the first scheduling information indicates that the second scheduling information is used to receive the target service includes:
the first scheduling information indicates that the second scheduling information satisfying a predetermined condition is used to receive the target service.

In an embodiment, the predetermined condition includes:
the first scheduling information is transmitted at a first timing for indicating transmitting the second scheduling information at a second timing, and the second scheduling information is used to receive the target service; or
the first scheduling information is transmitted at a first timing for indicating transmitting the second scheduling information during a first time period, and the second scheduling information is used to receive the target service.

In an embodiment, the first scheduling information indicates a resource type for the second scheduling information for receiving through a second bit field.

In an embodiment, the second scheduling information is configured through a target search space, where the target search space is used to receive the target service.

It should be noted that the terminal provided in the embodiments of the present application may achieve all the method steps implemented in the above method embodiments applied to the network device and achieve the same technical effect. Therefore, the same parts and beneficial effects as in the method embodiments of the present application are not elaborated in detail.

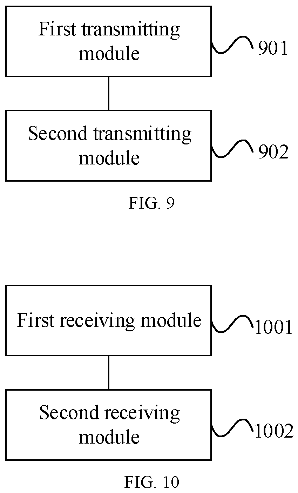

FIG. 9 is a schematic diagram of an apparatus for transmitting a service according to an embodiment of the present application. As shown in FIG. 9, the apparatus is applied to a network device, and the apparatus includes:
a first transmitting module 901, used for transmitting first scheduling information to a terminal, where the first scheduling information is used to schedule a resource for transmitting a first data segment of a target service in a first scheduling mode; and
a second transmitting module 902, used for configuring an association relationship between the first scheduling information and second scheduling information, and transmitting the second scheduling information to the terminal, where the second scheduling information is used to schedule a resource for transmitting a second data segment of the target service in a second scheduling mode.

In an embodiment, the second transmitting module includes:
a first configuration submodule, used for configuring an association relationship between first parameter information of the first scheduling information and second parameter information of the second scheduling information.

In an embodiment, the association relationship between the first parameter information of the first scheduling information and the second parameter information of the second scheduling information includes:
the association relationship between the first parameter information and the second parameter information is a target function relationship.

In an embodiment, the target function relationship includes:
an equal relationship; or
the first parameter information of the first scheduling information is an odd number, and the second parameter information of the second scheduling information is an even number; or
the first parameter information of the first scheduling information is an even number, and the second parameter information of the second scheduling information is an odd number.

In an embodiment, the second scheduling information includes the first parameter information of the first scheduling information, the second parameter information of the second scheduling information, and/or the association relationship between the first parameter information of the first scheduling information and the second parameter information of the second scheduling information; and/or
the first scheduling information includes the first parameter information of the first scheduling information, the second parameter information of the second scheduling information, and/or the association relationship between the first parameter information of the first scheduling information and the second parameter information of the second scheduling information.

In an embodiment, the first parameter information is HARQ process information corresponding to the first scheduling mode, and the second parameter is HARQ process information corresponding to the second scheduling mode.

In an embodiment, the HARQ process information includes an HARQ process number or the number of HARQ processes.

In an embodiment, the association relationship between the first scheduling information and the second scheduling information includes:
the first scheduling information indicates that the second scheduling information is used to transmit the target service.

In an embodiment, the first scheduling information indicates that the second scheduling information is used to transmit the target service includes:
the first scheduling information carries first indication information, where the first indication information is used to indicate that the second scheduling information is used to transmit the target service.

In an embodiment, the first indication information is further used to indicate whether the second scheduling information is used to transmit the target service.

In an embodiment, the second scheduling information further carries specific parameter information, where the specific parameter information is used to indicate that the second scheduling information is used to transmit the target service.

In an embodiment, the first scheduling information indicates that the second scheduling information is used to transmit the target service includes:
the first scheduling information indicates that the second scheduling information satisfying a predetermined condition is used to transmit the target service.

In an embodiment, the predetermined condition includes:
the first scheduling information is transmitted at a first timing for indicating transmitting the second scheduling information at a second timing, and the second scheduling information is used to transmit the target service; or
the first scheduling information is transmitted at a first timing for indicating transmitting the second scheduling information during a first time period, and the second scheduling information is used to transmit the target service.

In an embodiment, the apparatus further includes:
a configuration module, used for configuring the first scheduling information to indicate, by a second bit field, a resource type of the second scheduling information for transmitting the target service.

In an embodiment, the second scheduling information is configured through a target search space, where the target search space is used to transmit the target service.

FIG. 10 is a schematic diagram of an apparatus for receiving a service according to an embodiment of the present application. As shown in FIG. 10, the apparatus is applied to a terminal, and the apparatus includes:
a first receiving module 1001, used for receiving first scheduling information transmitted from a network device, and receiving a first data segment of a target service transmitted in a first scheduling mode based on the first scheduling information; and
a second receiving module 1002, used for receiving second scheduling information transmitted from the network device, and receiving a second data segment of the target service transmitted in a second scheduling mode based on the second scheduling information, where an association relationship exists between the first scheduling information and the second scheduling information.

In an embodiment, the association relationship exists between the first scheduling information and the second scheduling information includes:
an association relationship exists between first parameter information of the first scheduling information and second parameter information of the second scheduling information.

In an embodiment, the association relationship between the first parameter information and the second parameter information includes a target function relationship.

In an embodiment, the target function relationship includes:
an equal relationship; or
the first parameter information of the first scheduling information is an odd number, and the second parameter information of the second scheduling information is an even number; or
the first parameter information of the first scheduling information is an even number, and the second parameter information of the second scheduling information is an odd number.

In an embodiment, the second scheduling information includes the first parameter information of the first scheduling information, the second parameter information of the second scheduling information, and/or the association relationship between the first parameter information of the first scheduling information and the second parameter information of the second scheduling information; and/or
the first scheduling information includes the first parameter information of the first scheduling information, the second parameter information of the second scheduling information, and/or the association relationship between the first parameter information of the first scheduling information and the second parameter information of the second scheduling information.

In an embodiment, the first parameter information is HARQ process information corresponding to the first scheduling mode, and the second parameter is HARQ process information corresponding to the second scheduling mode.

In an embodiment, the HARQ process information includes an HARQ process number or the number of HARQ processes.

In an embodiment, the association relationship exists between the first scheduling information and the second scheduling information includes:
the first scheduling information indicates that the second scheduling information is used to receive the target service.

In an embodiment, the first scheduling information indicates that the second scheduling information is used to receive the target service includes:
the first scheduling information carries first indication information, where the first indication information is used to indicate that the second scheduling information is used to receive the target service.

In an embodiment, the first indication information is further used to indicate whether the second scheduling information is used to receive the target service.

In an embodiment, the second scheduling information further carries specific parameter information, where the specific parameter information is used to indicate that the second scheduling information is used to receive the target service.

In an embodiment, the first scheduling information indicates that the second scheduling information is used to receive the target service includes:
the first scheduling information indicates that the second scheduling information satisfying a predetermined condition is used to receive the target service.

In an embodiment, the predetermined condition includes:
the first scheduling information is transmitted at a first timing for indicating transmitting the second scheduling information at a second timing, and the second scheduling information is used to receive the target service; or
the first scheduling information is transmitted at a first timing for indicating transmitting the second scheduling information during a first time period, and the second scheduling information is used to receive the target service.

In an embodiment, a resource type of the second scheduling information for receiving the target service is indicated by the first scheduling information through a second bit field.

In an embodiment, the second scheduling information is configured through a target search space, where the target search space is used to receive the target service.

The method and apparatus are based on the same conception. As the principle of solving problems by the method and apparatus is similar, the implementation of the apparatus and method may refer to each other, and the repetition is omitted.

It should be noted that the division of units in the embodiments of the present application is schematic, and is only a logical function division, and other division modes may be performed in actual implementation. In an embodiment, the functional units in the various embodiments of the present application may be integrated into one processing unit, or each unit may exist alone physically, or two or more units may be integrated into one unit. The aforementioned integrated unit may be implemented in the form of hardware or software functional unit.

In case that the integrated unit is implemented in the form of a software functional unit and sold or used as an independent product, it may be stored in a processor readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes, such as USB flash disk, mobile hard disk, read-only memory (ROM), random access memory (RAM), magnetic disk, or optical disk.

It should be noted that the above apparatus provided in the embodiments of the present application may achieve all the method steps implemented in the above method embodiment and achieve the same technical effect. The same parts and beneficial effects as in the method embodiment are not elaborated in detail here.

An embodiment of the present application further provides a processor-readable storage medium storing a computer program for causing a processor to execute the service transmitting method provided in the aforementioned embodiments, including:
transmitting first scheduling information to a terminal, where the first scheduling information is used to schedule a resource for transmitting a first data segment of a target service in a first scheduling mode; and
configuring an association relationship between the first scheduling information and second scheduling information, and transmitting the second scheduling information to the terminal, where the second scheduling information is used to schedule a resource for transmitting a second data segment of the target service in a second scheduling mode.

The computer program is further used for causing the processor to execute the service receiving method provided in the aforementioned embodiments, including:
receiving first scheduling information transmitted from a network device, and receiving a first data segment of a target service transmitted in a first scheduling mode based on the first scheduling information; and
receiving second scheduling information transmitted from the network device, and receiving a second data segment of the target service transmitted in a second scheduling mode based on the second scheduling information, where an association relationship exists between the first scheduling information and the second scheduling information.

It should be noted that, the processor-readable storage medium may be any available medium or data storage device that a processor may access, including but not limited to magnetic memory (for example, floppy disks, hard disks, magnetic tapes, magneto-optical disks (MO), etc.), optical memory (for example, CDs, DVDs, BDs, HVDs, etc.), and semiconductor memory (for example, ROM, EPROM, EEPROM, non-volatile memory (NAND FLASH), solid-state drive (SSD), etc.).

Those skilled in the art should understand that embodiments disclosed herein may be provided as methods, systems, or computer program products. Therefore, the present application may take a form of complete hardware embodiments, complete software embodiments, or embodiments combining software and hardware. Moreover, the present application may take a form of computer program products implemented on one or more computer available storage medium (including but not limited to disk storage, optical storage, etc.) containing computer available program codes.

The present application is described with reference to the flowcharts and/or block diagrams of the methods and devices (systems), and computer program product according to the embodiments of the present application. It should be understood that each process and/or box in the flowchart and/or block diagram, as well as the combination of processes and/or boxes in the flowchart and/or block diagram, may be implemented by computer executable instructions. These computer executable instructions may be provided to processors of general-purpose computers, specialized computers, embedded processors, or other programmable data processing devices to generate a machine, allowing instructions executed by processors of computers or other programmable data processing devices to generate devices for implementing functions specified in one or more steps of a flowchart or one or more blocks in a block diagram.

These processor executable instructions may also be stored in a processor readable memory that may guide computers or other programmable data processing devices to work in a specific way, causing the instructions stored in the processor readable memory to generate manufactures including an instruction device, the instruction device implementing the functions specified in one or more processes and/or blocks of a flowchart.

These processor executable instructions may also be loaded onto a computer or other programmable data processing device to perform a series of operational steps on the computer or other programmable device to generate computer-implemented processing. The instructions executed on the computer or other programmable device provide steps for implementing the functions specified in one or more processes and/or blocks of a flowchart.

Those skilled in the art may make various modifications and variations to the present application without departing from the scope of the present application. In this way, if these modifications and variations of the present application fall within the scope of the claims and their equivalent, the present application also intends to include these modifications and variations.

## Claims

1. A method for receiving a service, comprising:
transmitting first scheduling information to a terminal, wherein the first scheduling information is used to schedule a resource for transmitting a first data segment of a target service in a first scheduling mode; and
configuring an association relationship between the first scheduling information and second scheduling information, and transmitting the second scheduling information to the terminal, wherein the second scheduling information is used to schedule a resource for transmitting a second data segment of the target service in a second scheduling mode.

2. The method of claim 1, wherein configuring the association relationship between the first scheduling information and the second scheduling information comprises:
configuring an association relationship between first parameter information of the first scheduling information and second parameter information of the second scheduling information.

3. The method of claim 2, wherein the association relationship between the first parameter information of the first scheduling information and the second parameter information of the second scheduling information comprises:
the association relationship between the first parameter information and the second parameter information is a target function relationship.

4. The method of claim 3, wherein the target function relationship comprises:
an equal relationship; or
the first parameter information of the first scheduling information is an odd number, and the second parameter information of the second scheduling information is an even number; or
the first parameter information of the first scheduling information is an even number, and the second parameter information of the second scheduling information is an odd number.

5. The method of claim 2, wherein
the second scheduling information comprises the first parameter information of the first scheduling information, the second parameter information of the second scheduling information, and/or the association relationship between the first parameter information of the first scheduling information and the second parameter information of the second scheduling information; and/or
the first scheduling information comprises the first parameter information of the first scheduling information, the second parameter information of the second scheduling information, and/or the association relationship between the first parameter information of the first scheduling information and the second parameter information of the second scheduling information.

6. The method of claim 2, wherein the first parameter information is hybrid automatic repeat request, HARQ, process information corresponding to the first scheduling mode, and the second parameter is HARQ process information corresponding to the second scheduling mode.

7. The method of claim 6, wherein the HARQ process information comprises an HARQ process number or the number of HARQ processes.

8. The method of claim 1, wherein configuring the association relationship between the first scheduling information and the second scheduling information comprises:
the first scheduling information indicates that the second scheduling information is used to transmit the target service.

9. The method of claim 8, wherein the first scheduling information indicates that the second scheduling information is used to transmit the target service comprises:
the first scheduling information carries first indication information, wherein the first indication information is used to indicate that the second scheduling information is used to transmit the target service.

10. The method of claim 9, wherein the first indication information is further used to indicate whether the second scheduling information is used to transmit the target service.

11. The method of any one of claims 1 to 8, wherein the second scheduling information further carries specific parameter information, wherein the specific parameter information is used to indicate that the second scheduling information is used to transmit the target service.

12. The method of claim 8, wherein the first scheduling information indicates that the second scheduling information is used to transmit the target service comprises:
the first scheduling information indicates that the second scheduling information satisfying a predetermined condition is used to transmit the target service.

13. The method of claim 12, wherein the predetermined condition comprises:
the first scheduling information is transmitted at a first timing for indicating transmitting the second scheduling information at a second timing, and the second scheduling information is used to transmit the target service; or
the first scheduling information is transmitted at a first timing for indicating transmitting the second scheduling information during a first time period, and the second scheduling information is used to transmit the target service.

14. The method of claim 8, further comprising:
configuring the first scheduling information to indicate, by a second bit field, a resource type of the second scheduling information for transmitting the target service.

15. The method of claim 1, wherein the second scheduling information is configured through a target search space, wherein the target search space is used to transmit the target service.

16. A method for receiving a service, comprising:
receiving first scheduling information transmitted from a network device, and receiving a first data segment of a target service transmitted in a first scheduling mode based on the first scheduling information; and
receiving second scheduling information transmitted from the network device, and receiving a second data segment of the target service transmitted in a second scheduling mode based on the second scheduling information, wherein an association relationship exists between the first scheduling information and the second scheduling information.

17. The method of claim 16, wherein the association relationship exists between the first scheduling information and the second scheduling information comprises:
an association relationship exists between first parameter information of the first scheduling information and second parameter information of the second scheduling information.

18. The method of claim 17, wherein the association relationship between the first parameter information and the second parameter information comprises a target function relationship.

19. The method of claim 18, wherein the target function relationship comprises:
an equal relationship; or
the first parameter information of the first scheduling information is an odd number, and the second parameter information of the second scheduling information is an even number; or
the first parameter information of the first scheduling information is an even number, and the second parameter information of the second scheduling information is an odd number.

20. The method of claim 17, wherein the second scheduling information comprises the first parameter information of the first scheduling information, the second parameter information of the second scheduling information, and/or the association relationship between the first parameter information of the first scheduling information and the second parameter information of the second scheduling information; and/or
the first scheduling information comprises the first parameter information of the first scheduling information, the second parameter information of the second scheduling information, and/or the association relationship between the first parameter information of the first scheduling information and the second parameter information of the second scheduling information.

21. The method of claim 17, wherein the first parameter information is hybrid automatic repeat request, HARQ, process information corresponding to the first scheduling mode, and the second parameter is HARQ process information corresponding to the second scheduling mode.

22. The method of claim 21, wherein the HARQ process information comprises an HARQ process number or the number of HARQ processes.

23. The method of claim 16, wherein the association relationship between the first scheduling information and the second scheduling information comprises:
the first scheduling information indicates that the second scheduling information is used to receive the target service.

24. The method of claim 23, wherein the first scheduling information indicates that the second scheduling information is used to receive the target service comprises:
the first scheduling information carries first indication information, wherein the first indication information is used to indicate that the second scheduling information is used to receive the target service.

25. The method of claim 24, wherein the first indication information is further used to indicate whether the second scheduling information is used to receive the target service.

26. The service receiving method of any one of claims 16 to 23, wherein the second scheduling information further carries specific parameter information, wherein the specific parameter information is used to indicate that the second scheduling information is used to receive the target service.

27. The method of claim 23, wherein the first scheduling information indicates that the second scheduling information is used to receive the target service comprises:
the first scheduling information indicates that the second scheduling information satisfying a predetermined condition is used to receive the target service.

28. The method of claim 27, wherein the predetermined condition comprises:
the first scheduling information is transmitted at a first timing for indicating transmitting the second scheduling information at a second timing, and the second scheduling information is used to receive the target service; or
the first scheduling information is transmitted at a first timing for indicating transmitting the second scheduling information during a first time period, and the second scheduling information is used to receive the target service.

29. The method of claim 23, wherein a resource type of the second scheduling information for receiving the target service is indicated by the first scheduling information through a second bit field.

30. The method of claim 16, wherein the second scheduling information is configured through a target search space, wherein the target search space is used to receive the target service.

31. A network device, comprising a memory, a transceiver and a processor
wherein the memory is used for storing a computer program, the transceiver is used for transmitting and receiving data under control of the processor, and the processor is used for reading the computer program in the memory and executing the following operations:
transmitting first scheduling information to a terminal, wherein the first scheduling information is used to schedule a resource for transmitting a first data segment of a target service in a first scheduling mode; and
configuring an association relationship between the first scheduling information and second scheduling information, and transmitting the second scheduling information to the terminal, wherein the second scheduling information is used to schedule a resource for transmitting a second data segment of the target service in a second scheduling mode.

32. The network device of claim 31, wherein configuring the association relationship between the first scheduling information and the second scheduling information comprises:
configuring an association relationship between first parameter information of the first scheduling information and second parameter information of the second scheduling information.

33. The network device of claim 32, wherein the association relationship between the first parameter information of the first scheduling information and the second parameter information of the second scheduling information comprises:
the association relationship between the first parameter information and the second parameter information is a target function relationship.

34. The network device of claim 33, wherein the target function relationship comprises:
an equal relationship; or
the first parameter information of the first scheduling information is an odd number, and the second parameter information of the second scheduling information is an even number; or
the first parameter information of the first scheduling information is an even number, and the second parameter information of the second scheduling information is an odd number.

35. The network device of claim 32, wherein the second scheduling information comprises the first parameter information of the first scheduling information, the second parameter information of the second scheduling information, and/or the association relationship between the first parameter information of the first scheduling information and the second parameter information of the second scheduling information; and/or
the first scheduling information comprises the first parameter information of the first scheduling information, the second parameter information of the second scheduling information, and/or the association relationship between the first parameter information of the first scheduling information and the second parameter information of the second scheduling information.

36. The network device of claim 32, wherein the first parameter information is hybrid automatic repeat request, HARQ, process information corresponding to the first scheduling mode, and the second parameter is HARQ process information corresponding to the second scheduling mode.

37. The network device of claim 36, wherein the HARQ process information comprises an HARQ process number or the number of HARQ processes.

38. The network device of claim 31, wherein configuring the association relationship between the first scheduling information and the second scheduling information comprises:
the first scheduling information indicates that the second scheduling information is used to transmit the target service.

39. The network device of claim 38, wherein the first scheduling information indicates that the second scheduling information is used to transmit the target service comprises:
the first scheduling information carries first indication information, wherein the first indication information is used to indicate that the second scheduling information is used to transmit the target service.

40. The network device of claim 39, wherein the first indication information is further used to indicate whether the second scheduling information is used to transmit the target service.

41. The network device of any one of claims 31 to 38, wherein the second scheduling information further carries specific parameter information, wherein the specific parameter information is used to indicate that the second scheduling information is used to transmit the target service.

42. The network device of claim 38, wherein the first scheduling information indicates that the second scheduling information is used to transmit the target service comprises:
the first scheduling information indicates that the second scheduling information satisfying a predetermined condition is used to transmit the target service.

43. The network device of claim 42, wherein the predetermined condition comprises:
the first scheduling information is transmitted at a first timing for indicating transmitting the second scheduling information at a second timing, and the second scheduling information is used to transmit the target service; or
the first scheduling information is transmitted at a first timing for indicating transmitting the second scheduling information during a first time period, and the second scheduling information is used to transmit the target service.

44. The network device of claim 38, wherein the operations further comprise:
configuring the first scheduling information to indicate, by a second bit field, a resource type of the second scheduling information for transmitting the target service.

45. The network device of claim 31, wherein the second scheduling information is configured through a target search space, wherein the target search space is used to transmit the target service.

46. A terminal, comprising a memory, a transceiver and a processor,
wherein the memory is used for storing a computer program, the transceiver is used for transmitting and receiving data under control of the processor, and the processor is used for reading the computer program in the memory and executing the following operations:
receiving first scheduling information transmitted from a network device, and receiving a first data segment of a target service transmitted in a first scheduling mode based on the first scheduling information; and
receiving second scheduling information transmitted from the network device, and receiving a second data segment of the target service transmitted in a second scheduling mode based on the second scheduling information, wherein an association relationship exists between the first scheduling information and the second scheduling information.

47. The terminal of claim 46, wherein the association relationship exists between the first scheduling information and the second scheduling information comprises:
an association relationship exists between first parameter information of the first scheduling information and second parameter information of the second scheduling information.

48. The terminal of claim 47, wherein the association relationship between the first parameter information and the second parameter information comprises a target function relationship.

49. The terminal of claim 48, wherein the target function relationship comprises:
an equal relationship; or
the first parameter information of the first scheduling information is an odd number, and the second parameter information of the second scheduling information is an even number; or
the first parameter information of the first scheduling information is an even number, and the second parameter information of the second scheduling information is an odd number.

50. The terminal of claim 47, wherein the second scheduling information comprises the first parameter information of the first scheduling information, the second parameter information of the second scheduling information, and/or the association relationship between the first parameter information of the first scheduling information and the second parameter information of the second scheduling information; and/or
the first scheduling information comprises the first parameter information of the first scheduling information, the second parameter information of the second scheduling information, and/or the association relationship between the first parameter information of the first scheduling information and the second parameter information of the second scheduling information.

51. The terminal of claim 47, wherein the first parameter information is hybrid automatic repeat request, HARQ, process information corresponding to the first scheduling mode, and the second parameter is HARQ process information corresponding to the second scheduling mode.

52. The terminal of claim 51, wherein the HARQ process information comprises an HARQ process number or the number of HARQ processes.

53. The terminal of claim 46, wherein the association relationship between the first scheduling information and the second scheduling information comprises:
the first scheduling information indicates that the second scheduling information is used to receive the target service.

54. The terminal of claim 53, wherein the first scheduling information indicates that the second scheduling information is used to receive the target service comprises:
the first scheduling information carries first indication information, wherein the first indication information is used to indicate that the second scheduling information is used to receive the target service.

55. The terminal of claim 54, wherein the first indication information is further used to indicate whether the second scheduling information is used to receive the target service.

56. The terminal of any one of claims 46 to 53, wherein the second scheduling information further carries specific parameter information, wherein the specific parameter information is used to indicate that the second scheduling information is used to receive the target service.

57. The terminal of claim 53, wherein the first scheduling information indicates that the second scheduling information is used to receive the target service comprises:
the first scheduling information indicates that the second scheduling information satisfying a predetermined condition is used to receive the target service.

58. The terminal of claim 57, wherein the predetermined condition comprises:
the first scheduling information is transmitted at a first timing for indicating transmitting the second scheduling information at a second timing, and the second scheduling information is used to receive the target service; or
the first scheduling information is transmitted at a first timing for indicating transmitting the second scheduling information during a first time period, and the second scheduling information is used to receive the target service.

59. The terminal of claim 53, wherein a resource type of the second scheduling information for receiving the target service is indicated by the first scheduling information through a second bit field.

60. The terminal of claim 46, wherein the second scheduling information is configured through a target search space, wherein the target search space is used to receive the target service.

61. An apparatus for transmitting a service, comprising:
a first transmitting module, used for transmitting first scheduling information to a terminal, wherein the first scheduling information is used to schedule a resource for transmitting a first data segment of a target service in a first scheduling mode; and
a second transmitting module, used for configuring an association relationship between the first scheduling information and second scheduling information, and transmitting the second scheduling information to the terminal, wherein the second scheduling information is used to schedule a resource for transmitting a second data segment of the target service in a second scheduling mode.

62. The apparatus of claim 61, wherein the second transmitting module comprises:
a first configuring submodule, used for configuring an association relationship between first parameter information of the first scheduling information and second parameter information of the second scheduling information.

63. The apparatus of claim 62, wherein the association relationship between the first parameter information of the first scheduling information and the second parameter information of the second scheduling information comprises:
the association relationship between the first parameter information of the first scheduling information and the second parameter information of the second scheduling information being a target function relationship.

64. The apparatus of claim 63, wherein the target function relationship comprises:
an equal relationship; or
the first parameter information of the first scheduling information is an odd number, and the second parameter information of the second scheduling information is an even number; or
the first parameter information of the first scheduling information is an even number, and the second parameter information of the second scheduling information is an odd number.

65. The apparatus of claim 62, wherein the second scheduling information comprises the first parameter information of the first scheduling information, the second parameter information of the second scheduling information, and/or the association relationship between the first parameter information of the first scheduling information and the second parameter information of the second scheduling information; and/or
the first scheduling information comprises the first parameter information of the first scheduling information, the second parameter information of the second scheduling information, and/or the association relationship between the first parameter information of the first scheduling information and the second parameter information of the second scheduling information.

66. The apparatus of claim 62, wherein the first parameter information is hybrid automatic repeat request, HARQ, process information corresponding to the first scheduling mode, and the second parameter is HARQ process information corresponding to the second scheduling mode.

67. The apparatus of claim 66, wherein the HARQ process information comprises an HARQ process number or the number of HARQ processes.

68. The apparatus of claim 61, wherein configuring the association relationship between the first scheduling information and the second scheduling information comprises:
the first scheduling information indicates that the second scheduling information is used to transmit the target service.

69. The apparatus of claim 68, wherein the first scheduling information indicates that the second scheduling information is used to transmit the target service comprises:
the first scheduling information carries first indication information, wherein the first indication information is used to indicate that the second scheduling information is used to transmit the target service.

70. The apparatus of claim 69, wherein the first indication information is further used to indicate whether the second scheduling information is used to transmit the target service.

71. The apparatus of any one of claims 61 to 68, wherein the second scheduling information further carries specific parameter information, wherein the specific parameter information is used to indicate that the second scheduling information is used to transmit the target service.

72. The apparatus of claim 68, wherein the first scheduling information indicates that the second scheduling information is used to transmit the target service comprises:
the first scheduling information indicates that the second scheduling information satisfying a predetermined condition is used to transmit the target service.

73. The apparatus of claim 72, wherein the predetermined condition comprises:
the first scheduling information is transmitted at a first timing for indicating transmitting the second scheduling information at a second timing, and the second scheduling information is used to transmit the target service; or
the first scheduling information is transmitted at a first timing for indicating transmitting the second scheduling information during a first time period, and the second scheduling information is used to transmit the target service.

74. The apparatus of claim 68, wherein the service transmitting apparatus further comprises:
configuring the first scheduling information to indicate, by a second bit field, a resource type of the second scheduling information for transmitting the target service.

75. The apparatus of claim 61, wherein the second scheduling information is configured through a target search space, wherein the target search space is used to transmit the target service.

76. An apparatus for receiving a service, comprising:
a first receiving module, used for receiving first scheduling information transmitted from a network device, and receiving a first data segment of a target service transmitted in a first scheduling mode based on the first scheduling information; and
a second receiving module, used for receiving second scheduling information transmitted from the network device, and receiving a second data segment of the target service transmitted in a second scheduling mode based on the second scheduling information, wherein an association relationship exists between the first scheduling information and the second scheduling information is present.

77. The apparatus of claim 76, wherein the association relationship exists between the first scheduling information and the second scheduling information comprises:
an association relationship exists between first parameter information of the first scheduling information and second parameter information of the second scheduling information.

78. The apparatus of claim 77, wherein the association relationship between the first parameter information and the second parameter information comprises a target function relationship.

79. The apparatus of claim 78, wherein the target function relationship comprises:
an equal relationship; or
the first parameter information of the first scheduling information is an odd number, and the second parameter information of the second scheduling information is an even number; or
the first parameter information of the first scheduling information is an even number, and the second parameter information of the second scheduling information is an odd number.

80. The apparatus of claim 77, wherein the second scheduling information comprises the first parameter information of the first scheduling information, the second parameter information of the second scheduling information, and/or the association relationship between the first parameter information of the first scheduling information and the second parameter information of the second scheduling information; and/or
the first scheduling information comprises the first parameter information of the first scheduling information, the second parameter information of the second scheduling information, and/or the association relationship between the first parameter information of the first scheduling information and the second parameter information of the second scheduling information.

81. The apparatus of claim 77, wherein the first parameter information is hybrid automatic repeat request, HARQ, process information corresponding to the first scheduling mode, and the second parameter is HARQ process information corresponding to the second scheduling mode.

82. The apparatus of claim 81, wherein the HARQ process information comprises an HARQ process number or the number of HARQ processes.

83. The apparatus of claim 76, wherein the association relationship between the first scheduling information and the second scheduling information comprises:
the first scheduling information indicates that the second scheduling information is used to receive the target service.

84. The apparatus of claim 83, wherein the first scheduling information indicates that the second scheduling information is used to receive the target service comprises:
the first scheduling information carries first indication information, wherein the first indication information is used to indicate that the second scheduling information is used to receive the target service.

85. The apparatus of claim 84, wherein the first indication information is further used to indicate whether the second scheduling information is used to receive the target service.

86. The apparatus of any one of claims 76 to 83, wherein the second scheduling information further carries specific parameter information, wherein the specific parameter information is used to indicate that the second scheduling information is used to receive the target service.

87. The apparatus of claim 83, wherein the first scheduling information indicates that the second scheduling information is used to receive the target service comprises:
the first scheduling information indicates that the second scheduling information satisfying a predetermined condition is used to receive the target service.

88. The apparatus of claim 87, wherein the predetermined condition comprises:
the first scheduling information is transmitted at a first timing for indicating transmitting the second scheduling information at a second timing, and the second scheduling information is used to receive the target service; or
the first scheduling information is transmitted at a first timing for indicating transmitting the second scheduling information during a first time period, and the second scheduling information is used to receive the target service.

89. The apparatus of claim 83, wherein a resource type of the second scheduling information for receiving the target service is indicated by the first scheduling information through a second bit field.

90. The apparatus of claim 76, wherein the second scheduling information is configured through a target search space, wherein the target search space is used to receive the target service.

91. A processor-readable storage medium, wherein the processor-readable storage medium stores a computer program for causing a processor to execute any of the methods of claims 1 to 15, or execute any of the methods of claims 16 to 30.
